(19) Europäisches Patentamt / European Patent Office / Office européen des brevets

(11) **EP 2 874 065 B1**

(12) **EUROPEAN PATENT SPECIFICATION**

(45) Date of publication and mention
of the grant of the patent:
**05.04.2017 Bulletin 2017/14**

(21) Application number: **14193335.8**

(22) Date of filing: **14.11.2014**

(51) Int Cl.:
*G05D 1/00* (2006.01)   *G06F 11/36* (2006.01)
*G05B 19/042* (2006.01)   *G05B 23/02* (2006.01)

(54) **Method and apparatus for controlling aircraft control systems**

Verfahren und Vorrichtung zur Steuerung von Flugzeugsteuerungssystemen

Procédé et appareil pour commander des systèmes de commande d'aéronef

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **15.11.2013 GB 201320233**

(43) Date of publication of application:
**20.05.2015 Bulletin 2015/21**

(73) Proprietor: **ULTRA ELECTRONICS LIMITED
Greenford, Middlesex
UB6 8UE (GB)**

(72) Inventors:
• **Scott, Ivan Anthony
Cambridge, Cambridgeshire CB24 9LJ (GB)**
• **Stothers, Ian
Cambridge, Cambridgeshire CB4 0WS (GB)**

(74) Representative: **Martin, Philip John et al
Marks & Clerk LLP
62-68 Hills Road
Cambridge
CB2 1LA (GB)**

(56) References cited:
**EP-A2- 0 541 326      EP-A2- 1 217 333
EP-A2- 2 595 023      WO-A2-03/042928
WO-A2-2009/105787      US-A1- 2006 200 278**

• **M. Sghairi ET AL: "Challenges in Building Fault
-Tolerant Flight Control System for a Civil
Aircraft", IAENG International Journal of
Computer Science, 20 November 2008
(2008-11-20), pages 495-499, XP055106403,
Retrieved from the Internet:
URL:http://www.iaeng.org/IJCS/issues_v35/i
ssue_4/IJCS_35_4_07.pdf [retrieved on
2015-09-10]**

**Description**

FIELD OF INVENTION

This invention relates to a method and apparatus for controlling aircraft control systems having multiple inputs and outputs, particularly those in safety critical systems such as landing gear controllers, steering controllers, hydraulic systems, doors and slides.

BACKGROUND TO THE INVENTION

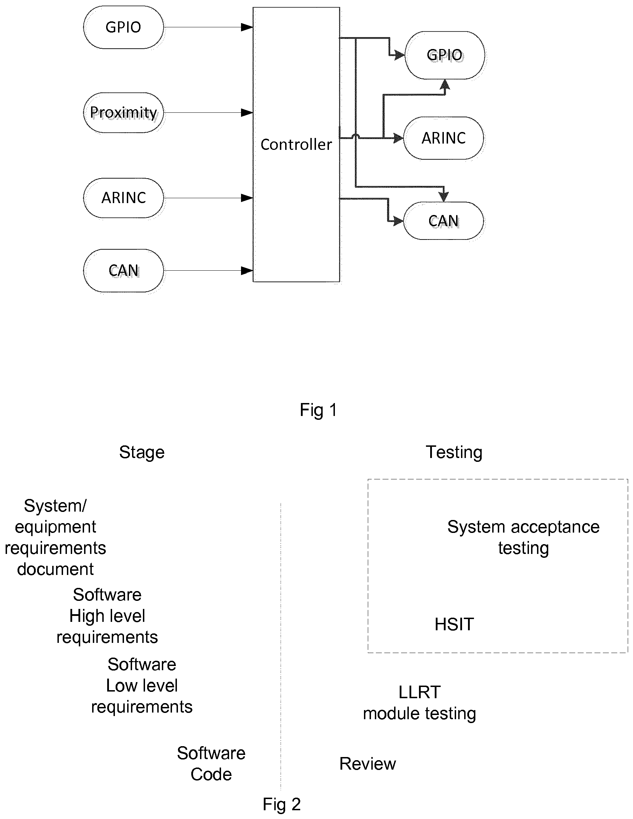

One example of an aircraft control system is a landing gear controller and is schematically depicted in Figure 1. Landing gear controllers generate actuation commands and discrete outputs dependent on the state of the system's inputs. Inputs are typically logical values which may be presented as discrete inputs (e.g. from a GPIO - general purpose input/output), signals from proximity sensors (proximity) or received over communications interfaces such as ARINC 429 (an aerospace serial bus standard and protocol) or CAN (Controller area network). The inputs are received by a controller which generates the outputs to the GPIO or the communications interfaces. The state of the outputs can be expressed as a set of Boolean equations

When designing complex systems having multiple inputs and outputs, a requirements document which defines the requirements of the system in terms of these inputs and outputs is created. The requirements document may be termed an SES (Systems Equipment Specification). The requirements document is then used to generate the high level requirements for the software which controls the system. The high level requirements are in turn used to generate the low level requirements for the software which are then used to generate the software code itself. As shown in Figure 2, a separate level of testing is carried out at each stage of the process. The code is subject to a detailed review which includes a manual review. The low level requirements of the software are subject to a module testing in which every path through the code is tested. The high level requirements are subject to a hardware and software integration test. The requirements document is subject to a system acceptance test which is often combined with the hardware and software integration test.

If any of the requirements in the requirements document change, the whole process of defining the high and low level requirements and the software code has to be repeated along with each level of testing. This can be an onerous task and can add significant cost to the design process.

The applicant has recognised the need for the aircraft control system to provide a mechanism for evaluating logical equations in an efficient manner both during the design process described above and in real-time operation. This component may be referred to as the "core logic engine".

SUMMARY OF THE INVENTION

According to a first aspect of the invention, there is provided an aircraft control system comprising:

> a processor,
> a plurality of inputs coupled to the processor for providing input data to the processor,
> a configuration database coupled to the processor wherein said configuration database comprises a set of truth tables which completely and unambiguously define all the logical operations which are to be performed on said plurality of inputs, and
> at least one output for outputting data from the processor wherein the output data is determined by the processor performing the logical operations on the input data and wherein the output data is used to actuate a component of the aircraft control system,
> wherein each truth table has thirteen or fewer inputs whereby when designing the aircraft control system all the logical operations are exhaustively tested in a practical time frame.

A truth table typically comprises one column for each input, a plurality of rows each specifying a different combination of each combination of inputs and one final column for the output of each combination of inputs. The number of rows is preferably sufficient so that every possible combination of inputs is specified. An incomplete truth table will have gaps in a row or may even be missing whole rows. However, this will be easy to spot and thus the use of truth tables ensures that the outputs are completely and unambiguously defined for all combinations of inputs. If there are any incomplete rows or missing rows, the truth table can be returned to the party which created it and they will then fill in the gaps. The use of truth tables is a simple but effective way to expose the behaviour of the system, even complex systems, to a user. For the logical operations, the configuration database may be said to consist only of truth tables.

In a safety critical system, exhaustive testing of all combinations of inputs and outputs is desired. The exhausting testing may include tests which are destructive. Accordingly, exhausting testing is typically only undertaken during an initial design process. However, such exhausting testing is essential during the design process to obtain certification of the system. The truth table ensures that all outputs are defined for all inputs and because all the relationships are defined, exhaustive testing is possible. However, the number of inputs (N) needs to be controlled because the size (i.e. number of rows) of a truth table is $2^N$. Accordingly, if there are too many inputs (and hence too many rows), it will not be possible to exhaustively test all the relationships in any useful or practical time frame. Accordingly, there are preferably thirteen inputs or fewer, more preferably eight or fewer, more six or fewer in each truth table and thus the size of the truth table is tractable. In this way, the exhausting testing may be completed in hours rather than days. Thus, a practical time frame for the complete system test is a few hours, preferably no more than an overnight or twelve hour run. Each truth table should take much less than an hour each to check.

Each truth table is preferably stored as a csv format file because this is a simple non-proprietary format. The truth table may also comprise an empty column to separate inputs and outputs. The truth table preferably comprises a row which includes a data dictionary name for each input and output; this row preferably appears first in the table. These names are preferably simple enough for a user to navigate easily through the files and be able to understand their purpose. The truth table may also comprise a column entitled comments to allow a text description of the output or action which is controlled by the output.

The plurality of inputs may be collated in a single data structure, e.g. an input vector of bits. Similarly, the plurality of outputs may be collated in a single data structure, e.g. an output vector of bits. The input and output data structures may be combined, e.g. to form an input/output vector. The inputs and outputs may be stored in a separate storage, e.g. memory, and an input/output vector map may be used to locate the input and outputs within the storage. The map may be configured as a constant translation table (or look-up table) from a name or handle for an input or output to the storage. For each truth table, configuration data may be in the form of a set of records which define the set of inputs, the logic function for calculating the state of the output and where to store the computed output. The logic function may be stored as an array of bits where, the state of the inputs may be used to define an address of the value of the output in the array. A weighted sum of the inputs may be used. The state of the output is then simply taken from the appropriate address in the array.

In other words, the configuration database may comprise an input/output vector map which defines where each input can be found in the storage and where each output is found in the storage. In this way, the output can be obtained in a consistent and reliable manner which takes a predictable length of time. The advantage of this scheme is determinism: the computation time both in real-time and during testing is independent of the value of the inputs and the logic function being evaluated and the memory usage is only dependent on the number of inputs. Moreover, this provides a consistent interface for the inputs to the output drivers and to outputs of all software components associated with input processing. It effectively decouples the logic (the control function) from the various heterogeneous inputs and outputs (GPIO, proximity sensors, CAN, ARINC etc.). Like the truth tables, the map may be stored as a csv file.

The input/output vector may be double buffered and may thus comprise a raw input/output vector and a core input/output vector. Double-buffering of the inputs and outputs provides a time-consistent set of inputs and outputs. However, this may not be enough to ensure that the truth tables are correctly processed.

As set out above, the number of inputs to each truth table is limited so that exhaustive testing can be carried out. In a preferred embodiment, each truth table relates to a particular output which may have multiple inputs and may have more inputs than the limit imposed for the truth table. Accordingly, in this case, a series of truth tables may be required for one overall output. This may mean that at least one of the truth tables in the series will require an input which is an output from one or more of the other truth tables. In this scenario, the first and second truth tables (and the underlying functional operations which they defined) may be termed cascaded logic operations. For such cascaded logic operations, the values of the inputs from the external components may be one cycle older than the outputs from the first set of functional operations, particularly where double buffering is used. Accordingly, the truth tables may not be implemented correctly.

One solution which addresses problems in keeping inputs consistent once logic blocks are cascaded is to partition the input/output vector into a public section for genuine inputs and outputs (e.g. inputs from external components and outputs to external components) and a private section for holding intermediate logic variables. This solution also facilitates exhaustive testing of individual logic blocks.

The partitioning of the input/output vector is preferably used to improve the performance of the aircraft control system in the context of defining all the logical operations as truth tables. However, it is also possible to use such a vector when only some and not all of the logical operations are defined as truth tables. As set out above, an advantage of this definition of the vector is determinism: the computation time is independent of the value of the inputs and the logic function being evaluated.

Thus, according to another aspect of the invention, there is provided apparatus for controlling a complex system such as an aircraft control system comprising:

a processor,

a plurality of inputs coupled to the processor for providing input data from the complex system to the processor,

a configuration database coupled to the processor wherein said configuration database comprises a set of truth tables with each truth table defining a functional operation to be performed on some of said plurality of inputs,

a plurality of outputs for outputting data from the processor wherein the output data is determined by the processor based on the plurality of functional operations which have been performed on the input data and wherein the output data is used to control the complex system, and

an input/output data structure which collates the plurality of inputs and outputs,

wherein at least one functional operation is a cascaded functional operation which is defined by a truth table which requires an input in the form of an intermediate value which is an output from a second truth table and

wherein the input/output data structure comprises a public section for collating inputs from the complex system and outputs to the complex system and a private section for collating each said intermediate value.

The functional operations include logical operations and the two terms may be used interchangeably in the following passages which apply to both of the above aspects of the invention.

It will be appreciated that there may be a plurality of cascaded functional (logical) operations and hence a plurality of intermediate values. Moreover, the second truth table may itself define a cascaded functional operation requiring an input in the form of a second intermediate value which is an output from a third truth table. Accordingly, each truth table may have a precedence rank which indicates the order in which each truth table is to be implemented. For example, a truth table which requires only genuine inputs could have a precedence rank of one indicating that it needs to be done first whereas a truth table requiring genuine inputs together with at least one input from a truth table having a precedence rank of one will have a rank of two indicating that it needs to be done after the other truth table and so on.

The processor may be configured to assign the precedence rank when building the configuration database by running a first cycle through the functional operations, assigning a first precedence rank to any functional operations which have completed during the first cycle, running a subsequent cycle through the functional operations, assigning a subsequent precedence rank to any functional operations which have completed during that cycle and repeating the running and assigning steps until a precedence rank is assigned to each functional operations. The processor may be configured to detect a cycle by determining that no precedence rank assignments are made during a cycle and simultaneously determining that there are still unassigned functional operations. Alternatively, the precedence rank may be assigned directly by just reviewing the inputs which are required for each functional operation. A precedence rank of one may be assigned to a truth table only if all inputs to that truth table are system inputs and a higher precedence rank to truth tables having inputs which are outputs from other truth tables. The assigning of the precedence rank typically only takes place during a configuration phase. Once the precedence rank is assigned, this will be followed during real-time operation. Thus, the assigning of the precedence ranks does not take place during real-time operation.

The approach of the present invention is very different from a typical implementation of arithmetic logic in software. For example, in typical software logic, a three way AND gate (i.e. if A, B and C = 1, P = 1, otherwise P=0) is often implemented so that the software "drops out", i.e. returns P = 0 if it detects that A = 0. Thus, the software is not deterministic because it will take a different amount of time to process depending on whether or not any inputs are zero. By contrast, processing the truth tables in a defined order ensures that the system is deterministic, i.e. will always take the same length of time to process. This may not be the most efficient way of processing but is usefully consistent and places a predictable and measurable upper bound on how long the system will take to complete the exhaustive testing (i.e. on the run-time computation). An alternative way of processing the truth tables is to run multiple passes through the truth tables until the system settles down. However, this method can use a large amount of processor resource. The use of a precedence rank addresses the constraints on the processor both during testing and in real-time operation.

The public section of the input/output data structure may be populated with first values for each input, e.g. by taking a snapshot of the values at a first moment in time. Each value in the public section may then be held constant, e.g. frozen, while the processor determines each intermediate value which is required to provide all the outputs. As set out above, intermediate values may be required to generate further intermediate values. Accordingly, the private section may be populated with the first intermediate values calculated using the first values for each input. The values in the public section may remain frozen while the first intermediate values are used to determine second intermediate values. The first and second intermediate values are frozen and used to determine the third intermediate values and so on. This process continues until the final outputs are prepared which may then be sent to the input/output vector and stored in the publication section. In this way, it is ensured that all the initial inputs on which the first and any other intermediate values are based are synchronous with each other. The outputs may then be determined as a final stage when all intermediate values have been determined and are thus determined from a synchronous set of inputs. As explained above, the outputs may be determined using a look-up table with the inputs being used as an index to the output value. When the outputs have been determined for a synchronous set of inputs and intermediates values, the public section may then updated to populate it with these outputs or the outputs may be used to control the complex system. If the outputs are sent to the public section, these outputs may then be frozen and second values for each input may also be input into the public section, e.g. by taking a snapshot of the values at a second moment in time, and the process of determining intermediate values and outputs is repeated. This provides a synchronous logic processing system with clocked inputs and outputs. The system operates in a data invariant manner and the execution time (both in testing and real-time) is constant for any set of inputs.

The input/output vector may comprise two structures, a first structure comprising a plurality of fields each defining a value for an input and a second structure comprising a plurality of fields each defining attributes. Each value may be defined as a Boolean value (0 or 1). Alternatively, it may be necessary to convert the value to a Boolean value, for example by using a threshold value, e.g. where x > 0 is interpreted as TRUE and x <= 0 is interpreted as FALSE, or by performing other operations, e.g. right shift followed by a mask. Accordingly, said attribute data may comprise data defining a threshold operation to apply to one or more of said plurality of inputs, and said processor may be configured to apply said threshold operation defining if a value of input data on said plurality of inputs has been exceeded, and wherein said processing means is further configured to generate an output signal indicative of said value of said input data meeting or exceeding said threshold. Alternatively, said attribute data may comprise data defining a mask to apply to one or more of said plurality of inputs, and said processor may be configured to apply said mask to data received on said one or more of said plurality of inputs.

The aircraft control system may be selected from a steering controller, a landing gear controller, a door controller and a slide controller. Other examples of such control systems include hydraulic controllers, break temperature monitoring controllers, ramp controllers, ice protection monitors, de-icing controllers and active noise controllers. As set out above, the plurality of inputs may include outputs from other truth tables. Furthermore, the plurality of inputs may include inputs from one or more sensors within the system. The types of sensors may include rotary variable differential transformers (RVDT), linear variable differential transformers (LVDT), resolvers and/or potentiometers. Such sensors may provide an input on the steering demand angle or the steering position angle for a steering subsystem. Proximity switches, microswitches or linear variable differential transformers may be used to provide input on whether the landing gear is up or down or whether there is any weight on the wheels. Such inputs may be used in a truth table defining a logical operation for the landing gear controller.

It will be appreciated that any suitable sensor may be used depending on the system being monitored. Other examples include proximity switches for the thrust reverser, slant skew or position of a slide which may be used for slide controllers. The ramp angle may be measured by a proximity sensor, RVDT, LVDT, resolver or more usually by a potentiometer. A pressure sensor may be used as an input in the hydraulic control system. The position of a spool valve in the same system may be monitored by an LVDT. Similarly, the position of a hydraulic valve and/or the oil level in the hydraulic control system may be monitored by an LVDT or an RVDT. In the brake temperature monitoring system, temperature sensors may include thermistors or thermocouples.

The at least one output actuates a component in the aircraft control system. For example, the at least one output may actuate a warning light or other alerting component on a crew alerting system. Alternatively, the at least one output may control a component in the aircraft control system, e.g. a steering component, a door (to prevent opening or closing) or a slide, the control may also shut down or otherwise override the entire aircraft control system.

For example, the complex system may comprise a proximity sensing component which provides input data. In this case, the first structure may comprise a field for each of the different fault types, e.g. sensor range, short circuit, open circuit etc. which are being detected by the proximity sensing component. Each attribute field may comprise a fault flag each of which are independently set.

Said attribute data may comprise at least one of input width and input position of said input data on said plurality of inputs. Said attribute data may comprise identifying indexes of two or more of said plurality of inputs defining an input bus. Said attribute data may comprise identifying indexes of two or more of said plurality of outputs defining an output bus. Said attribute data may comprise data defining a shift operation to apply to one or more of said plurality of inputs, and wherein said processing means is configured to apply said shift operation to data received on said one or more of said plurality of inputs.

The configuration database may also comprise a set of arithmetic operation functions and/or a set of confirmation logic functions. These functions may be written as CSV files for the reasons described above. Similarly, as above, the I/O Vector Map entries may be used to specify the output and both of the inputs for each function.

The functional (logical) operations may be arithmetic functions or arbitrary logic functions and the processor may comprise an operation module for determining the outputs to each logical operation based on the inputs (and intermediate values). The processor may further comprise an arithmetic (ALU) module for evaluating the arithmetic and logical operations and determining any outputs based on inputs (including intermediate values). The arithmetic and logical operations may include some or all of addition (which may be weighted), subtraction and multiplication of two inputs, together with Bit-wise AND, OR and XOR of two inputs, complement and shift.

As an example, the aircraft control system may be a steering controller and the steering controller comprises one or more steering subsystems such as a steer by wire system, a rudder steering system and a tiller steering system. One truth table in the set of truth tables may define a logical operation which is a determination of whether or not the steering subsystem has failed. Similarly, one truth table in the set of truth tables may define a logical operation which is a determination of whether or not tiller steering has failed. Similarly, one truth table in the set of truth tables may define a logical operation which is a determination of whether or not maintenance of the steering controller is required, For each of these logical operations, when it is determined to be true, e.g. when the steering subsystem has failed, the at least one output may activate an alerting component, e.g. a warning light on the crew alerting system (CAS). It will be appreciated that hundreds or even thousands of such truth table may be defined for each aircraft control system and these are merely illustrative examples.

Determining whether or not a steering system has failed may require input information from one or more sensors monitoring the steering subsystem. For example, there may be a plurality of fault monitors (e.g. RVDT) which monitor the status of the tiller steering subsystem. The steering subsystems may be ranked to prevent too many alerting components being actuated when multiple steering subsystems have failed. The logical operation to be performed on the more important subsystem may thus be a cascaded logical operation based on the lesser important subsystem(s). Similarly, determination of whether or not maintenance is required may be a cascaded logical operation for which the second logical operation may be a determination of whether or not a steering subsystem has failed.

The processor may further comprise a confirmer-counter module.

As set out above, testing of the apparatus is critical when the complex system is a safety critical system. Examples of such safety critical systems are set out above and include an aircraft landing gear controller, a cargo door controller, an emergency door controller or a nose-wheel steering controller.

According to another aspect of the invention, there is provided a method of testing an aircraft control system having a plurality of inputs and a plurality of outputs which actuate one or more components within the aircraft control system, the method comprising:

defining a plurality of logical operations which are to be performed on the plurality of inputs to generate the plurality of outputs;
expressing each logical operation as a truth table having thirteen or fewer inputs and having all outputs completely and unambiguously defined for the thirteen or fewer inputs; and
exhaustively testing each truth table.

The method may further comprise defining at least one logical operation as a cascaded logical operation comprising first and second logical operations and expressing the cascaded logical operation as a set of truth tables which comprises a first truth table for the first logical operation and a second truth table for the second logical operation, wherein the first truth table requires at least one input which is an output from the second truth table. In this way, each truth table can be restricted to the required thirteen or fewer inputs but complex logical operations can still be included.

The method may further comprise storing each truth table as an array of bits where the state of the inputs is used to define an address of the value of the output in the array. Testing each truth table may include providing a set of test inputs, retrieving the output by looking up of the value of the output in the array based on the test inputs and comparing the retrieved output with an expected output for the test input. The use of a look-up table and storage array ensures that the output can be obtained in a consistent and reliable manner in the same length of time regardless of the input. The testing is thus deterministic.

According to another aspect of the invention, there is a test system means for exhaustively testing all the logical operations of the aircraft control system. The test system may comprise:

means for determining if there is a loop in the functional operations being implemented in the configuration database, wherein the determining means is configured to
run a first cycle through the functional operations,
assign a first precedence rank to any functional operations which have completed during the first cycle, wherein the precedence rank is an indication of the order in which the functional operations is to be implemented,
run a subsequent cycle through the functional operations,
assign a subsequent precedence rank to any functional operations which have completed during that cycle,
repeat the running and assigning steps until a precedence rank is assigned to each functional operation and
detect a loop by determining that no precedence rank assignments are made during a loop and determining during that loop that there are still unassigned functional operations.

According to another aspect of the invention, there is a test system for a machine controller, the test system comprising:

a set of logic inputs for defining states of said machine controller;

a logic engine for evaluating said logic inputs to determine said states of said machine controller;

a set of logic outputs from said logic engine for testing a function of said machine controller;

wherein said core logic engine includes at least one feedback loop to feed an output from said logic engine back to an input of said logic engine; and

wherein said logic engine comprises:

means to take a snapshot of values of said logic inputs to temporarily freeze said values;

means to iteratively evaluate said frozen logic inputs until logic outputs have stabilised, wherein said iterative evaluation comprises determining values for a set of temporary, intermediate logic values, wherein said intermediate logical values include a value for said fed back output, and wherein said means to iteratively evaluate said frozen logic inputs includes means to continue iterative evaluation until said intermediate logic values have stabilised and then to allow said value for said fed back output to feed back to update a value of a said logic input for a next said snapshot.

Both the machine controller and the core logic engine which form part of the test system may be standalone components. Moreover, the test system may be used to test a said machine controller. The machine controller may be equated with the apparatus for controlling a complex system described above. Similarly, the core logic engine may be equated with the processor in the apparatus for controlling a complex system described above. Accordingly, the preferred and optional features described above apply equally to these embodiments.

The test system may further comprise means to disable said update, and a test interface to enable external manipulation of one or both of a said intermediate logical value and a value of said fed back output. Said logic engine may consist essentially of combinatorial logic blocks.

Said machine controller may further comprise means to inhibit inadvertent activation of said test interface which may comprises means for inputting and evaluating an engineering key to access said test interface.

According to another aspect of the invention, there is provided a programmable logic platform for performing logical operations, the platform comprising

a configuration data store configured to store configuration data defining a plurality of functional operations to be performed;

processing means coupled to said configuration data store to retrieve and process said stored configuration data;

a plurality of inputs for receiving input data for processing using said processing means; and

a plurality of outputs for outputting data derived from said processing means processing said received input data, wherein said configuration data comprises a set of truth tables defining said plurality of functional operations, with each truth table defining all the output data for a set of input data, a vector map encoding all the input data and output data defined in said truth tables, and attribute data for said plurality of input data and output data defining an arrangement of said plurality of input data and output data within said vector; and

wherein said processing means is configured to locate said output data defined in said vector map responsive to receiving said input data at said input and output said located output data via one of said plurality of outputs.

This aspect may be combined with the previous aspects and the following additional features also apply equally to the previous aspects.

Said vector map may comprise a plurality of records arranged into public data records and private data records. Said public data records may comprise data defining said input data receivable at said plurality of inputs, said attribute data, and said output data derivable from said input data using said processing means. Said private data records may comprise data defining intermediate data dependent on said input data. Said processing means may be configured to generate said intermediate data defined in said vector map responsive to said input data; and further configured to feedback said intermediate data to use as further inputs to generate said output data.

Said attribute data may comprise at least one of input width and input position of said input data on said plurality of inputs. Said attribute data may comprise identifying indexes of two or more of said plurality of inputs defining an input bus. Said attribute data may comprise identifying indexes of two or more of said plurality of outputs defining an output bus. Said attribute data may comprise data defining a mask to apply to one or more of said plurality of inputs, and wherein said processing means is configured to apply said mask to data received on said one or more of said plurality of inputs. Said attribute data may comprise data defining a shift operation to apply to one or more of said plurality of inputs, and wherein said processing means is configured to apply said shift operation to data received on said one or more of said plurality of inputs. Said attribute data may comprise data defining a threshold operation to apply to one or more of said plurality of inputs, and wherein said processing means is configured to apply said threshold operation defining if a value of input data on said plurality of inputs has been exceeded, and wherein said processing means is further configured to generate an output signal indicative of said value of said input data meeting or exceeding said threshold.

Said output data may comprise an arithmetic function of said input data, wherein said processing means further comprises arithmetic processing means, and wherein said vector map comprises records defining an arithmetic operation to be performed on one or more bits of said input data to generate said output data. Said functional operations may be arithmetic operations and may comprise one or more of add, subtract and multiply.

Said output data may comprise a logical function of one or more bits of said input data, wherein said processing means further comprises logical operation processing means; and wherein said vector map comprises records defining a logical operation to be performed on said one or more bits of said input data to generate said output data. Said logical operations may comprise at least one of AND, OR, XOR, complement and shift operations.

The programmable logic platform may further comprise a confirmer-counter module, wherein said confirmer-counter is coupled to said vector map to receive configuration data from said vector map. Said confirmer-counter module may be configured to monitor one or more of said plurality of inputs and generate an output indicative of an unexpected status of said one or more of said plurality of inputs. Said vector map may be configured to store data defining: said one or more inputs to be monitored by said confirmer-counter, a count value output from said confirmer-counter, at least one threshold value for use in said confirmer-counter, one or more of said one or more inputs to use as a reset signal, one or more conditions for incrementing and decrementing said count value, and a confirmer-counter output indicative of said at least one threshold being met or exceeded.

The programmable logic platform may further comprise one or more buffers configured to buffer said one or more inputs. Said one or more buffers may comprise registers. Said vector map may be configured to define a sequential arithmetic operation by defining an intermediate data value, and wherein said intermediate data value is buffered using said one or more buffers to provide a further input to generate said output data.

In all of the embodiments, said configuration data store may comprise non-volatile memory.

According to another aspect of the invention, there is provided a method of implementing a programmable logic platform, comprising

> generating functional requirement data defining a required operation of said digital logic platform;
> generating system definition data from said functional requirement data, wherein said system definition data comprises a vector map arranged to represent said functional requirement data in terms of input data receivable at one or more inputs of the programmable logic platform, output data derivable from said input data using said programmable logic platform, and attribute data for said plurality of inputs and outputs defining an arrangement of said plurality of inputs and outputs;
> providing a programmable logic platform as described above and
> loading said system definition data into the configuration data store of said programmable logic platform;

The method may further comprise operating said programmable logic platform.

The invention further provides processor control code to implement the above-described systems and methods, for example on a general purpose computer system or on a digital signal processor (DSP). The code is provided on a non-transitory physical data carrier such as a disk, CD- or DVD-ROM, programmed memory such as non-volatile memory (e.g. Flash) or read-only memory (Firmware). Code (and/or data) to implement embodiments of the invention may comprise source, object or executable code in a conventional programming language (interpreted or compiled) such as C, or assembly code, or code for a hardware description language. As the skilled person will appreciate such code and/or data may be distributed between a plurality of coupled components in communication with one another.

The processor may operate under the control of stored program code, or may comprise dedicated hardware implemented in electronic circuitry, or may comprise a combination of some dedicated hardware modules and some systems under program control.

BRIEF DESCRIPTION OF DRAWINGS

The invention will now be described, by way of example only with reference to the accompanying figures, in which:

> Figure 1 is a block diagram of a typical complex system such as an aircraft control system;
> Figure 2 is a schematic flowchart of the test requirements for a complex system;
> Figure 3a is a block diagram of a complex system comprising a core logic engine;
> Figures 3b and 3c are block diagrams of alternative aircraft control systems;
> Figure 3d is a schematic illustration of a logical operation for an aircraft control system;
> Figure 4a illustrates one method for verifying the core logic configuration parameters;
> Figure 4b shows one method for testing a single functional block of the core logic engine;
> Figure 5 is a schematic illustration of the impact of a change in a truth table;

Figures 6 and 7 are block diagrams of alternative complex systems comprising a core logic engine;

Figures 8a to 8c are examples of cascaded logic blocks;

Figure 8d shows one logic implementation for an edge detector

Figure 8e shows an erroneous implementation of the logic in Figure 8d;

Figure 8f and 8g show alternative corrections to the logic in Figure 8e;

Figure 9a shows a signal flow diagram for arithmetic and logical operations which are implemented in the core logic engine;

Figure 9b is a schematic architecture for an arithmetic and logic unit (ALU);

Figure 9c is an example showing how the ALU of Figure 9b is used to calculate cabin pressure differential;

Figure 9d is an example of a 16 bit multiplexor;

Figure 9e is an example of a 16 bit multiplexor using ALU functions;

Figure 10a is a schematic of the architecture for a confirmer;

Figure 10b is an example of confirmer usage;

Figure 11 a is a schematic diagram illustrating the core logic configuration data;

Figure 11b is a schematic diagram illustrating how the core logic uses the I/O vector map.

DETAILED DESCRIPTION OF THE DRAWINGS

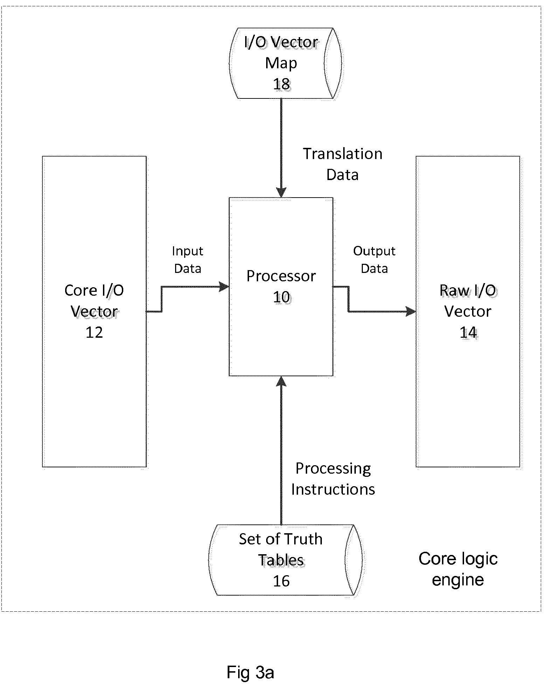

Figure 3a shows a simplified diagram of a core logic engine which may be connected in an aircraft control system which may be termed a complex system. The core logic engine comprises a processor 10 which obtains input data from a core input/output vector 12 which may itself receive input data from a plurality of inputs, including modules such as proximity sensors (proximity), over communications interfaces (ARINC, CAN) or other modules such as GPIO. The core logic engine also comprises a configuration database which comprises a set of truth tables 16 containing instructions for processing the input(s). The processor places the outputs into the raw input/output vector 14. The outputs may be transferred back to some or all of the modules from which the input data was received, for example to control the complex system. Each truth table is processed in the same way regardless of what the state of the inputs and outputs are. For example, it is the task of the core logic input processing to take inputs from the I/O Vector and convert them into a single bit Boolean value: 1 or 0.

The core logic engine needs a data structure for every logical input and output in order to tell the core logic engine where to obtain its data and where to put its results. The data structure may be termed the I/O Vector Map source file 18 and may form part of the configuration database. The file may contain a set of collated records (one for each input and each output) and may be held in a CSV file. For example, the input and output identifiers (e.g. p1_near and WOW1) could be used to specify a location in the I/O Vector for the corresponding inputs and outputs. In general each I/O vector does not contain simple Boolean values, e.g. the value field might be an integer representing a temperature sensor reading or the value might be a Boolean variable but may still have attribute fields that contain status and validity indications in addition to the data itself. For example, one I/O vector format is a vector comprising two structures, each containing two 16 bit integer fields: value and attributes.

| Attribute | Value |
|---|---|
| Bits 31-16 | Bits 15 - 0 |

The core logic engine of Figure 3a may be incorporated into a landing gear controller and in such a system as shown in Figure 1, one of the inputs to the system is a proximity sensing component and one example of the I/O vector format for such a component is shown below:

| Bit Position | 15-8 | 7 | 6 | 5 |
|---|---|---|---|---|
| Fault type | Spare | Sensor range | Short circuit | Open circuit |

| Bit Position | 4 | 3 | 2 | 1 | 0 |
|---|---|---|---|---|---|
| Fault type | Drive phase | Drive gain | Not consistent | Stale data | Confirmed fault |

In this case, the value field contains a simple Boolean (perhaps implemented with more than one bit set when TRUE to increase the hamming distance) but the attribute field contains a number of independently set fault flags.

An example of a truth table for the proximity sensing component is given below:

| p1_near | p1_inval | | WOW1 |
|---|---|---|---|
| 0 | 0 | | 0 |
| 0 | 1 | | 0 |
| 1 | 0 | | 1 |
| 1 | 1 | | 0 |

It will be appreciated that this could be written to a CSV file. The inputs to this logic function are p1_near and p1_inval which are abbreviations of "proximity sensor channel 1 is near" and "proximity sensor channel 1 is invalid" respectively. The third column is empty and marks the boundary between columns specifying inputs and those specifying outputs. This table has a single logical output: WOW1 or "weight on wheels 1". This table explicitly defines the logical relationship between WOW1 and the inputs p1_near and p1_inval. The equivalent Boolean expression is: WOW1 = p1_near AND (NOT p1_inval).

The identifier p1_near corresponds to the Boolean contained in the value field associated with the first proximity sensing channel. Assuming that the p1_inval is determined by the instantaneous validity (rather than the absence of confirmed faults) it is TRUE if any of the fault flags in the attribute field is set. Other logical inputs might involve detecting when the value field is above or below a fixed threshold (e.g. overcurrent or excessive temperature detectors).

As set out above, the core logic engine is used to process inputs from the I/O vector and convert them into a single bit Boolean value. Accordingly, each record in the I/O Vector Map source file (e.g. p1_near and WOW1) is used to extract a bit-field from an I/O vector entry and convert it into a logical value. For example, each record may comprise a name, an index to select the I/O vector element, an instruction (e.g. right shift) to select the least significant bit of the bit-field, an instruction (e.g. bit-mask) to isolate the bit field and a threshold to convert the unsigned integer input into a Boolean value. The initial value (init) of each logical variable should also be defined so that the initial state of the system reflects the requirements in the data dictionary.

An example of a set of records is shown below in table form for convenience; as before this can be written as a CSV file:

| name | index | shift | Mask | threshold | init | comment |
|---|---|---|---|---|---|---|
| p1_near | 3 | 0 | 0xFFFF | 1 | 0 | prox chan 1 is near |
| p1_inval | 3 | 16 | 0xFFFE | 2 | 1 | prox chan 1 is not valid |
| p2_near | 4 | 0 | 0xFFFF | 1 | 0 | prox chan 2 is near |
| p2_inval | 4 | 16 | 0xFFFE | 2 | 1 | prox chan 2 is not valid |
| p3_near | 5 | 0 | 0xFFFF | 1 | 0 | prox chan 3 is near |
| p3_inval | 5 | 16 | 0xFFFE | 2 | 1 | prox chan 3 is not valid |
| WOW1 | 9 | 0 | 1 | 1 | 0 | prox 1 is near & valid |
| WOW2 | 9 | 1 | 1 | 1 | 0 | prox 2 is near & valid |
| WOW3 | 9 | 2 | 1 | 1 | 0 | prox 3 is near & valid |
| CWOW | 15 | 0 | 1 | 1 | 0 | composite weight on wheels |

The entry for p1_inval indicates that to obtain this logical input the logic engine must fetch from the I/O Vector using index 3 (i.e. the 4th element). The logic engine then converts the fetched value to a Boolean value, for example by performing a right-shift by 16 followed by a mask using bit-wise AND with 0xFFFE.

The control system accepts data of many types: examples might be a 16-bit field representing angular position in a steering control system or an 8-bit temperature indication. A threshold is used in a comparison to convert wider-ranged data into Boolean logical values that can then be used and inputs to combinatorial logic. Examples might be "is steering angle commanded out-of-range", "is temperature above set-point". In the above example, the threshold value is set at 2. In other words, the value TRUE is obtained if any attribute bits are set except the LSB (least significant bit). In other embodiments the configurable threshold may be replaced with ALU subtractions and a fixed comparison, with x > 0 is interpreted as TRUE and x <= 0 is interpreted as FALSE.

The entry for WOW2 indicates that the logic engine should write this output bit to the I/O Vector using index 9, at bit position 1. The mask and threshold are superfluous for writing logical outputs but WOW2 is also used as an input to other logic functions so the logic engine needs to know how to fetch it back again.

The I/O Vector Map and the truth tables together form part of the configuration database for the core logic engine. Each truth table may thus be encoded as follows:

| field | Meaning |
|---|---|
| output | I/O Vector Map entry used to write output logical value |
| length | Number of inputs |
| Input[0] | I/O Vector Map entry used to fetch first input value |
| Input[1] | I/O Vector Map entry used to fetch second input value |
| ... | ... |
| lookup[0] | Bit-packed lookup table of the logic function ($2^{length-3}$ bytes) |
| lookup[1] | Bits 16-31 |
| ... | ... |

In the illustrative embodiment, the set of possible outputs are stored as a vector of bits. The advantage of this scheme is determinism: the computation time is independent of the value of the inputs and the logic function being evaluated and the memory usage is only dependent on the number of inputs. It doesn't have to be implemented this way: alternate implementations include storing the list of minterms & searching to see if the current set of inputs matches one on the list. Though compact for sparse functions (output is mostly zero) the size of the list depends on the logic function and the time taken to do the search depends on how many minterms have to be stored. Another alternative is to convert from Boolean equation into a set of instructions for a simple interpreter. Converting the equation into a reverse-polish form would make the implementation simpler but even still exhaustively testing an interpreter is not normally feasible.

The core logic engine configuration data is an aggregate data structure containing the I/O Vector Map and a binary encoding of all the required truth tables. A software tool will be required to build the binary configuration data for the logic engine. If we assume that the output, length and inputs are also encoded as 16 bit integers and that the smallest addressable unit is 8 bits that gives us the possible structure for WOW1 as:

| field | value |
|---|---|
| output | 6 |
| length | 2 |
| inputs | 0 |
| | 1 |
| lookup | 0x4 |

The output is in the 7th row of the I/O Vector Map table so its index would be 6 (assuming C-style indexing from zero). The number of inputs is two and that defines the length of the two variable-length parameters: the list of inputs and the output lookup table. The inputs are in the first two rows of the I/O Vector Map so the indices are 0 and 1. The lookup table is only 4 bits long so can be encoded as a single 16 bit value. This very small truth table can therefore be described by 5 integers: an output index, a length, two input indices and a 4 bit lookup.

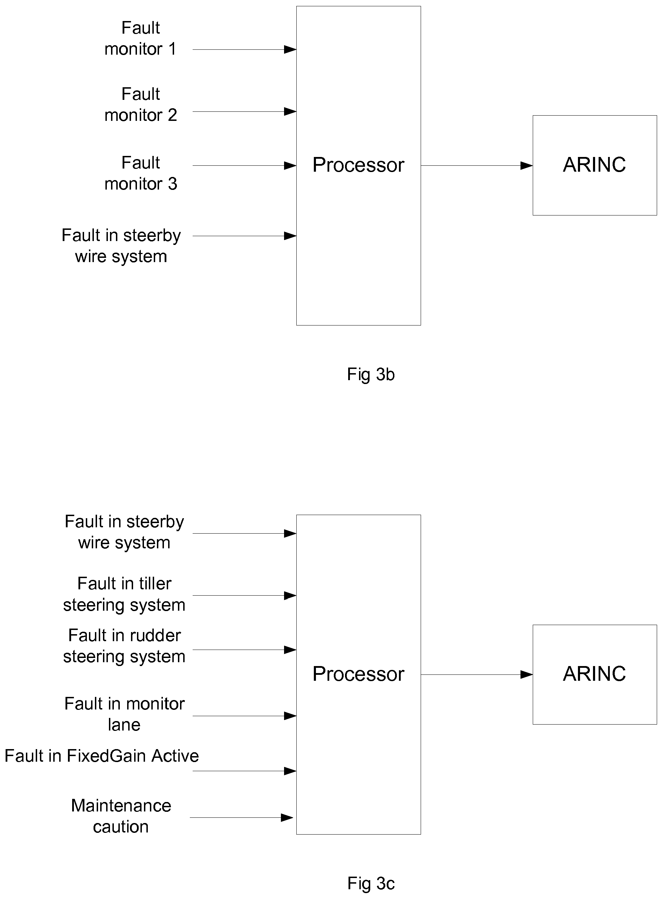

It will be appreciated that the truth table set out above is merely one example. Typically, there will be hundreds if not thousands of truth tables for each system. Merely for further illustration of the concept, Figure 3b illustrates the inputs to and resulting output from the processor which relate to a truth table for the tiller steering system. Similarly, Figure 3c illustrates the inputs to and resulting output from the processor which relate to a truth table from the nose wheel steering system. More generally, the tiller steering system and nose wheel steering system could be considered to form a steering system.

Figure 3b shows four inputs into the processor which are processed according to the relevant truth table which provides an output to the crew alerting system (CAS) via the ARINC. The output may be defined as "ML_CAS_TillerSteering_Fail". Three of the inputs are received from three separate fault monitors which are checking for faults on the tiller handle. Examples of these fault monitors include rotational variable differential transformers (RVDT) which are sensors to measure the angular position of the tiller wheel. Thus, two of the inputs may be received from such sensors and may be defined as "ML_RVDT1_Fault_Latch" and "ML_RVDT2_Fault_Latch" respectively. A third input may be from another sensor which compares the differences between the outputs of the RVDTs and reports if the difference between the angular rotational values from the RVDTs is beyond a threshold value. This input may be defined as "ML_RVDT_Reas_Fault_Latch". A fourth input is an output from another truth table which is determining the status of the steerby wire system. This input may be defined as "ML_CAS_SteerByWire_Fail". In each of these definitions, ML stands for monitor lane. Each component is typically separately connected to both a control lane and a monitor lane. The monitor lane checks the control lane is functioning. The monitor lane may comprise its own separate processor.

The truth table is defined as follows:

| ML_CAS_Steer ByWire_Fail | ML_RVDT1_Fault_Latch | ML_RVDT2_Fault Latch | ML_RVDT_Reas _Fault Latch | | ML_CAS_Tiller Steering_Fail |
|---|---|---|---|---|---|
| 0 | 0 | 0 | 0 | | 0 |
| 0 | 0 | 0 | 1 | | 1 |
| 0 | 0 | 1 | 0 | | 1 |
| 0 | 0 | 1 | 1 | | 1 |
| 0 | 1 | 0 | 0 | | 1 |
| 0 | 1 | 0 | 1 | | 1 |
| 0 | 1 | 1 | 0 | | 1 |
| 0 | 1 | 1 | 1 | | 1 |
| 1 | 0 | 0 | 0 | | 0 |
| 1 | 0 | 0 | 1 | | 0 |
| 1 | 0 | 1 | 0 | | 0 |
| 1 | 0 | 1 | 1 | | 0 |
| 1 | 1 | 0 | 0 | | 0 |
| 1 | 1 | 0 | 1 | | 0 |
| 1 | 1 | 1 | 0 | | 0 |
| 1 | 1 | 1 | 1 | | 0 |

In this arrangement, a fault in the steerby wire system is considered to be more serious than a fault in the tiller steering system. Thus, if a fault in the steerby wire system is reported, i.e. has a value of 1, no fault is reported on the tiller steering system. This avoids cluttering the crew alerting system with too many alerting signals. However, if no fault is reported on the steerby wire system, a fault will be reported on the tiller steering system unless all the monitors are not returning any faults, i.e. unless all the inputs are 0. This may be expressed as:

• Set CAS Indication when Tiller Handle data NOT available AND Steer By Wire CAS Indication is not set; else reset it

• Tiller Data not available if either RVDT individual fault monitor set or reasonableness monitor set

• Else ok.

Figure 3c shows six different inputs into the processor which are processed according to the relevant truth table which provides an output to the crew alerting system (CAS) via the ARINC. In this case, the output is whether or not maintenance is advised and may be defined as "ML_CAS_NWS_Maintenance_Advisory". Three of the inputs are outputs from other truth tables which determine whether or not to send an alert to the CAS if there are faults in the steerby wire system, the rudder steering system and the tiller steering system, respectively. These inputs are termed, "ML_CAS_SteerByWire_Fail", "ML_CAS_RudderSteering_Fail" and "ML_CAS_TillerSteering_Fail". Thus, the output from Figure 3b is an input to the truth table which is processed in Figure 3c. Another input is whether or not there is a fault in the monitor lane, "ML_Fail3". A final input is an output from another truth table which determines whether or not to send an alert regarding the fixed gain to the CAS "ML_CAS_FixedGain_Active". As with Figure 3b, there is also an input for a fault which is considered to be more serious than the fault which is being determined. In this case, the more important fault is whether or not maintenance is cautioned rather than merely being advised. This input is termed "ML_CAS_NWS_Maintenance_Caution". The truth table is defined as follows:

| | | | | | | | | | | | | | | | | | | | | | | | | |
|---|---|---|---|---|---|---|---|---|---|---|---|---|---|---|---|---|---|---|---|---|---|---|---|---|
| ML_CAS_NWS_Maintenance_Advisory | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| ML_Fail3 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 0 |
| ML_CAS_SteerByWire_Fail | 0 | 0 | 1 | 1 | 0 | 0 | 1 | 1 | 0 | 0 | 1 | 1 | 0 | 0 | 1 | 1 | 0 | 0 | 1 | 1 | 0 | 0 | 1 | 0 |
| ML_CAS_RudderSteering_Fail | 0 | 0 | 0 | 0 | 1 | 1 | 1 | 1 | 0 | 0 | 0 | 0 | 1 | 1 | 1 | 1 | 0 | 0 | 0 | 0 | 1 | 1 | 1 | 0 |
| ML_CAS_TillerSteering_Fail | 0 | 0 | 0 | 0 | 0 | 0 | 0 | 0 | 1 | 1 | 1 | 1 | 1 | 1 | 1 | 1 | 0 | 0 | 0 | 0 | 0 | 0 | 0 | 1 |
| ML_CAS_NWS_Maintenance_Caution | 0 | 0 | 0 | 0 | 0 | 0 | 0 | 0 | 0 | 0 | 0 | 0 | 0 | 0 | 0 | 1 | 1 | 1 | 1 | 1 | 1 | 1 | 1 | 1 |
| ML_CAS_FixedGain_Active | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

EP 2 874 065 B1

(continued)

| ML_CAS_NWS_Maintenance_Advisory | ML_Fail3 | ML_CAS_SteerBy_Wire_Fail | ML_CAS_Rudder Steering_Fail | ML_CAS_TillerSteering_Fail | ML_CAS_NWS_Maintenance_Caution | ML_CAS_FixedGain_Active |
|---|---|---|---|---|---|---|
| 0 | 1 | 0 | 0 | 1 | 1 | 0 |
| 0 | 0 | 1 | 0 | 1 | 1 | 0 |
| 0 | 1 | 1 | 0 | 1 | 1 | 0 |
| 0 | 0 | 0 | 1 | 1 | 1 | 0 |
| 0 | 1 | 0 | 1 | 1 | 1 | 0 |
| 0 | 0 | 1 | 1 | 1 | 1 | 0 |
| 0 | 1 | 1 | 1 | 1 | 1 | 0 |
| 0 | 0 | 0 | 0 | 0 | 0 | 1 |
| 0 | 1 | 0 | 0 | 0 | 0 | 1 |
| 0 | 0 | 1 | 0 | 0 | 0 | 1 |
| 0 | 1 | 1 | 0 | 0 | 0 | 1 |
| 0 | 0 | 0 | 1 | 0 | 0 | 1 |
| 0 | 1 | 0 | 1 | 0 | 0 | 1 |
| 0 | 0 | 1 | 1 | 0 | 0 | 1 |
| 0 | 1 | 1 | 1 | 0 | 0 | 1 |
| 0 | 0 | 0 | 0 | 1 | 0 | 1 |
| 0 | 1 | 0 | 0 | 1 | 0 | 1 |
| 0 | 0 | 1 | 0 | 1 | 0 | 1 |
| 0 | 1 | 1 | 0 | 1 | 0 | 1 |
| 0 | 0 | 0 | 1 | 1 | 0 | 1 |
| 0 | 1 | 0 | 1 | 1 | 0 | 1 |
| 0 | 0 | 1 | 1 | 1 | 0 | 1 |
| 0 | 1 | 1 | 1 | 1 | 0 | 1 |
| 0 | 0 | 0 | 0 | 0 | 1 | 1 |

15

(continued)

| ML_CAS_FixedGain_Active | ML_CAS_NWS_Maintenance_Caution | ML_CAS_TillerSteering_Fail | ML_CAS_RudderSteering_Fail | ML_CAS_SteerByWire_Fail | ML_Fail3 | ML_CAS_NWS_Maintenance_Advisory |
|---|---|---|---|---|---|---|
| 1 | 1 | 0 | 0 | 0 | 1 | 0 |
| 1 | 1 | 0 | 0 | 1 | 0 | 0 |
| 1 | 1 | 0 | 0 | 1 | 1 | 0 |
| 1 | 1 | 0 | 1 | 0 | 0 | 0 |
| 1 | 1 | 0 | 1 | 0 | 1 | 0 |
| 1 | 1 | 0 | 1 | 1 | 0 | 0 |
| 1 | 1 | 0 | 1 | 1 | 1 | 0 |
| 1 | 1 | 1 | 0 | 0 | 0 | 0 |
| 1 | 1 | 1 | 0 | 0 | 1 | 0 |
| 1 | 1 | 1 | 0 | 1 | 0 | 0 |
| 1 | 1 | 1 | 0 | 1 | 1 | 0 |
| 1 | 1 | 1 | 1 | 0 | 0 | 0 |
| 1 | 1 | 1 | 1 | 0 | 1 | 0 |
| 1 | 1 | 1 | 1 | 1 | 0 | 0 |
| 1 | 1 | 1 | 1 | 1 | 1 | 0 |

In this arrangement, if any other alerts have been issued to the CAS, no alert advising maintenance is sent to the CAS. This avoids cluttering the crew alerting system with too many alerting signals. However, if none of the listed alerts have been reported, an alert will be sent out if there is a fault on the ML which may also be termed a failsafe level 3. This may be expressed as:

• Set CAS Indication when Failsafe Level 3 AND NOT (Steer By Wire Fail OR Rudder Steering Fail OR Tiller Steering Fail OR NWS Maintenance Caution OR NWS Fixed Gain); else reset it.

In both the examples of Figures 3b and 3c, an alert is the resulting output. However, it will be appreciated that the output may also control the system, e.g. control the nose wheel steering or tiller steering. For example, the truth tables for a cargo door control unit typically all relate to control of the unit rather than alerting mechanisms. There may be as many as 1500 tables to define all the logical operations for such a unit.

In the example of Figure 3c, all of the outputs are zero except for one line. Nevertheless, all the inputs and outputs are stored. The complete logic function is stored as an array of bits where the state of the inputs is used to define an address of the value of the output in the array. The state of the output is then simply taken from the appropriate address in the array. In this way, the output can be obtained in a consistent and reliable manner which takes a predictable length of time.

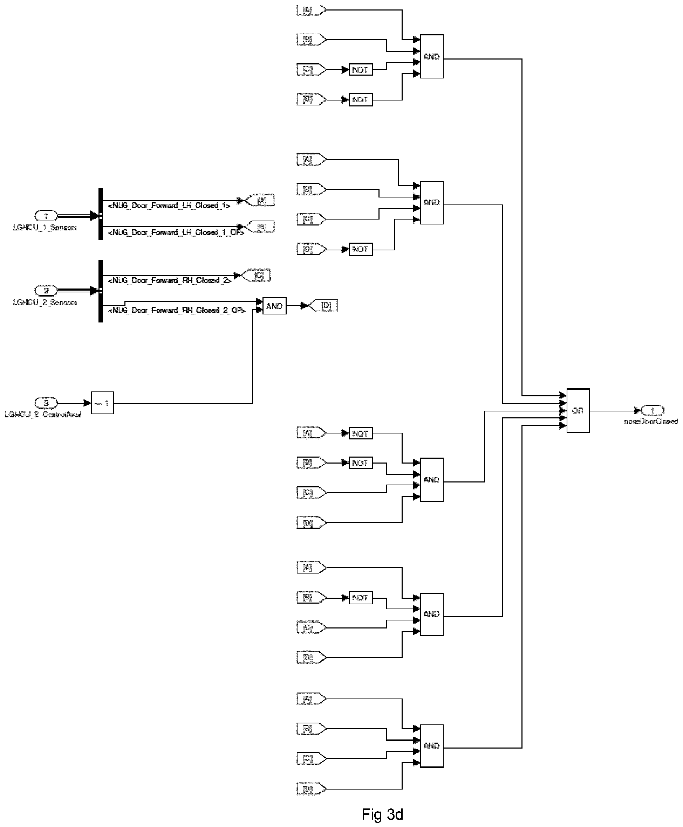

As another example, Figure 3d illustrates the logic which is captured in a truth table for a nose landing gear. As shown there are two Landing Gear and Hydraulic Control Unit (LGHCU) sensors (1,2). Within the sensors, there is a first sensor for determining whether or not the nose landing gear forward left hand door is closed. This input is labelled "NLG_Forward_LH_Door_Closed_Prx_derived_near" and is input A in Figure 3d. There is also an input to determine whether or not the sensor is operational. This input is labelled "NLG_Forward_LH_Door_Closed_Prx_Valid" and is input B in Figure 3d. There is a second sensor for determining whether or not the nose landing gear forward right hand door is closed. This input is labelled "NLG_Forward_RH_Door_Closed_Prx_derived_near" and is input D in Figure 3d. There is also an input to determine whether or not the sensor is operational which is logic based on a signal regarding the availability of the LGHCU sensors. This input is labelled "NLG_Forward_RH_Door_Closed_Prx_Valid" and is input C in Figure 3d. The truth table is set out below:

| NLGDoorClosed | NLG_Forward_RH_Door_Closed_Prx_derived_near | NLG_Forward_RH_Door_Closed_Prx_valid | NLG_Forward_LH_Door_Closed_Prx_derived_near | NLG_Forward_LH_Door_Closed_Prx_valid |
|---|---|---|---|---|
| 0 | 0 | 0 | 0 | 0 |
| 0 | 1 | 0 | 0 | 0 |
| 0 | 0 | 1 | 0 | 0 |
| 1 | 1 | 1 | 0 | 0 |
| 0 | 0 | 0 | 1 | 0 |
| 0 | 1 | 0 | 1 | 0 |
| 0 | 0 | 1 | 1 | 0 |
| 1 | 1 | 1 | 1 | 0 |
| 0 | 0 | 0 | 0 | 1 |
| 0 | 1 | 0 | 0 | 1 |
| 0 | 0 | 1 | 0 | 1 |
| 0 | 1 | 1 | 0 | 1 |
| 1 | 0 | 0 | 1 | 1 |
| 1 | 1 | 0 | 1 | 1 |
| 0 | 0 | 1 | 1 | 1 |
| 1 | 1 | 1 | 1 | 1 |

As shown in Figure 3d, the output is 1 to indicate that the nose landing gear door is closed when any one of the results of the AND operations outputs is 1. For the first AND gate to provide an output of 1, each of the inputs regarding the left hand door need to have a value of 1 and each of the inputs regarding the right hand door need to be set to 0. This is captured in the fourth line from the bottom of the truth table. For the second AND gate to provide an output of 1, all inputs need to be set to one except the input relating to the validity of the right hand door closing sensor. This is captured in the third line from the bottom of the truth table. For the third AND gate to provide an output of 1, each of the inputs regarding the right hand door need to have a value of 1 and each of the inputs regarding the left hand door need to be set to 0. This is captured in the fourth line from the top of the truth table. For the fourth AND gate to provide an output of 1, all inputs need to be set to one except the input relating to the validity of the left hand door closing sensor. This is captured in the eighth line from the top of the truth table. For the fifth AND gate to provide an output of 1, all inputs need to be set to one and this is captured in the last line of the truth table.

Truth tables have the advantage that the output state is explicitly specified, and may therefore be reviewed, for every possible set of input states. Although only a few examples are set out above, all the truth tables should be complete and unambiguous so that they specify once and only once the required output for every permutation of input. "Don't care" entries are not permitted. Furthermore, it is preferable to name the files so that users of the data can navigate easily through the files and understand their purpose, e.g. single output truth tables may have the same name as the output. The files may be named to represent the project function that they support rather than the logical function that they implement which should avoid confusion if the content is later changed. The comment field should preferably be used in all csv files. Attention should be paid to the spellings in the Header Record because this is used to auto-generate configuration data. All fields must be present in all records, including a comment entry in every record. The csv standard should be applied conservatively when using characters in the comments field. These files should preferably not be processed automatically.

The size of a truth table is $2^N$ where N is the number of independent inputs. This obviously becomes unmanageable as N is increased. A six input table in a small font will fit on one sheet of A4, four pages for eight inputs but for the 13 input functions that have proposed will cover approximately 130 pages and reviewing will be costly and error-prone. In addition, the favoured method for implementing the logical functions is to weight the inputs in order to calculate the minterm index and then use that index to lookup the output value in a bit-string. This method is very light in computation resources and the index calculation and lookup time are independent of the input states so it is highly deterministic. The lookup table is $2^N$ bits in length, or $2^{N-3}$ bytes. It is possible that there will be 200 logic expressions to evaluate. Implemented on a microcontroller (such as a dsPIC33F for example), constant data may be stored in one region of memory on the device, such as the upper half of a 16-bit data memory address space. This may then be mapped onto a 32k byte region of FLASH. Using the dsPIC33F for example, with only 32kbytes of constants easily accessible that suggests a limit of 10 inputs for each truth table so that the truth table is less than 128 bytes.

Thus, serious problems can arise in both the review process and the software implementation if the number of inputs in any given table grows large. For this reason, there are typically no more than 8 inputs and only rarely over 8 inputs with 13 inputs representing the maximum. Nevertheless, expressing requirements in a form such as a truth table allows us to generalise the form of logical requirements expression and implement software using a function whose code is unaffected by the logical function and whose operation is parameterised (configured) by the truth table dimensions and content.

The use of truth tables and the structure of the SES puts the onus of requirement validation on the author of the SES. To achieve a perfect requirements document, the requirement author must be in an output based frame of mind when expressing requirements. Otherwise, it is possible that the requirements document may be incomplete or conflicting. A simple example of a pair of requirements which results in conflict is set out below:

Control section of requirement specification:

The software shall set Output1 according to the following logic:

IF Switch X is in the On position THEN

Output1 = true
ELSE
Output1 = false
ENDIF

BIT section of requirement specification:
If Failure Y has occurred then the software shall set all outputs to False.

Alternatively, the first requirement could be specified as:

If Input Switch X is in the On position and there are no Fail1 failures, then the software shall set Output1 to True.

However, such a specification is incomplete because it is not specified what happens with Output1 under all other conditions. A complete specification is thus:

IF Switch X is in the On position AND there are no Fail1 failures THEN

    Output1 = true
    ELSE
    Output1 = false
    ENDIF

The present applicant has recognised that expression of outputs can be generalised, and can be made demonstrably complete and unambiguous (defined once and only once for all possible input conditions) when they are in the form of truth tables. The above simple example becomes:
The software shall set Output1 according to the following logic:

| Switch X is in On position | There are any Fail1 failures | Output1 |
|---|---|---|
| False | False | False |
| False | True | False |
| True | False | True |
| True | True | False |

Truth tables have the advantage that the output state is explicitly specified, and may therefore be reviewed, for every possible set of input states.

The truth tables may be stored in any format but CSV format files are particularly appropriate for storing truth tables because it is a simple, non-proprietary format and may be configured in subversion. The logical expression may be represented in other forms, e.g. excel table or logic gate diagram but the CSV file is taken as the master. An example of a CSV file and its corresponding tabular form are shown below. It will be appreciated that the logical expression may also be represented as a NOR gate, e.g. in Logic Friday:

CSV file

LH_MLG_DNLK1_Valid,LH_MLG_DNLK2_Valid,,No_Valid_Data,Comment

0,0,, 1 ,Both sensors are invalid. No valid data available.

0,1 ,,0,Valid data from Ch2. Use this.

1,0"0,Valid data from Ch1. Use this.

1,1 ,,0,Valid data from both channels. Cross-compare for consistency.

Tabular form (e.g. in excel)

| LH_MLG_DNLK1_Valid | LH_MLG_DNLK2_Valid | | No_Valid_Data | Comment |
|---|---|---|---|---|
| 0 | 0 | | 1 | Both sensors are invalid |
| 0 | 1 | | 0 | Valid data from Ch2. Use this. |
| 1 | 0 | | 0 | Valid data from Ch1. Use this. |
| 1 | 1 | | 0 | Valid data from both channels. Cross-compare for consistency. |

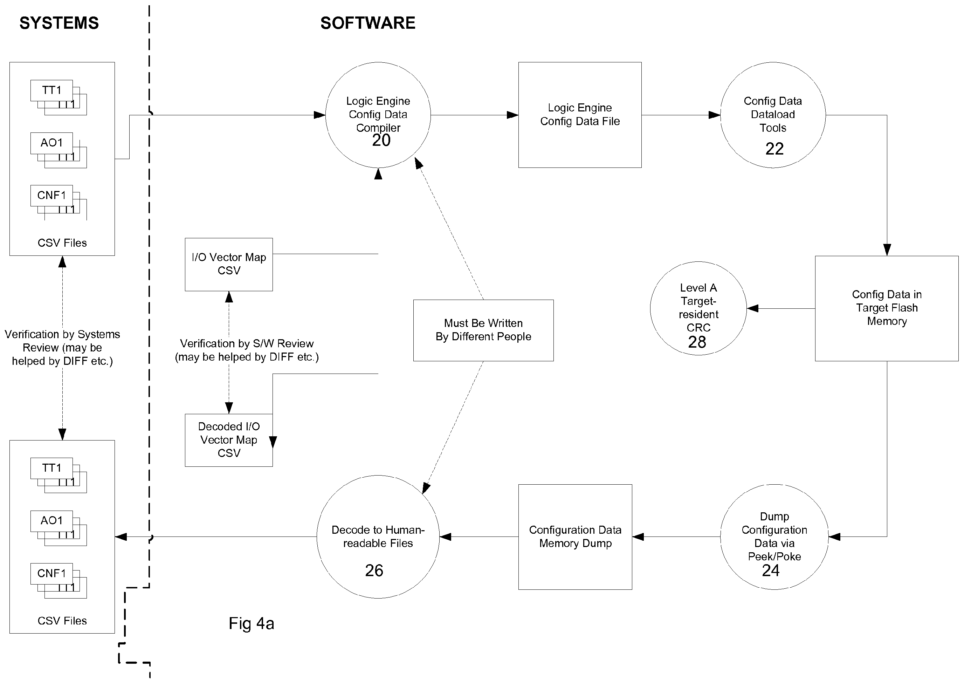

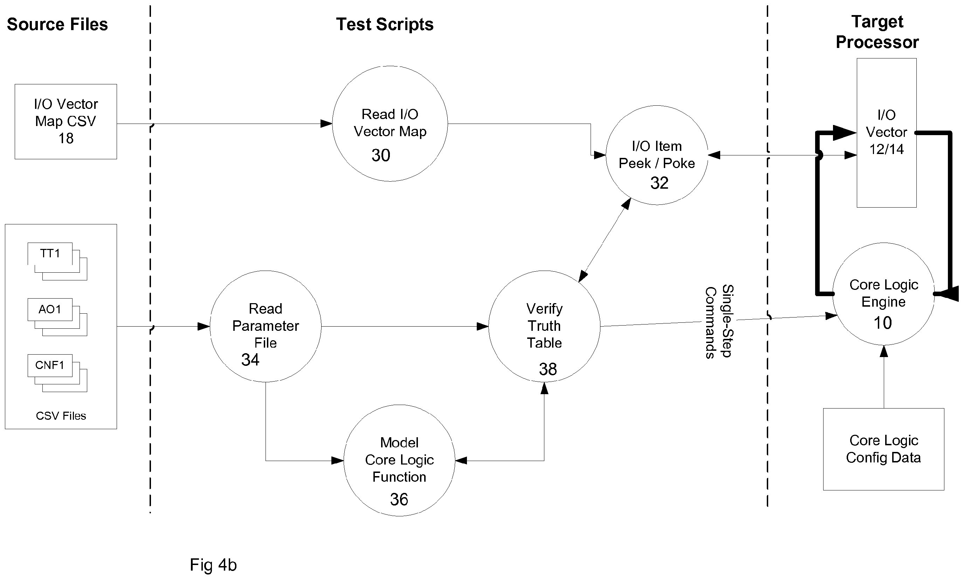

Figure 4a illustrates one method for verifying the core logic configuration parameters and Figure 4b shows one method for testing a single functional block of the core logic engine. Figure 4a shows that the configuration data for the overall system includes source files for an array of truth tables (TT1, TT2, ...), an array of arithmetic operation structures

EP 2 874 065 B1

(AO1, AO2, ...) and an array of confirmation logic structures (CNF1, CNF2...). These source files are typically written as CSV files for the reasons described above and sourced from the SES. An I/O vector map is also part of the configuration data but this is not sourced from the SES rather this a design output from the software development as described above. The source files and the I/O vector map are input to a logic engine configuration data compiler 20. The compiler 20 creates a configuration data file for the logic engine which is sent to a dataload tool(s) 22 for loading the configuration data file onto the target. The dataload tool 22 creates configuration data in the flash memory of the target.

This configuration data in the flash memory may be accessed by a detector 28 on the target to detect errors in data storage or transmission, e.g. level A CRC (cyclic redundancy check). The flash memory may be on-chip FLASH within the microcontroller but could alternatively be off-chip memory.

The configuration data in the flash memory may also be dumped (i.e. stored for further examination) using for example peek/poke techniques 24. We now have a memory dump of the configuration data on the target which is read as a binary image by a test script. The binary image is decoded by a decoder 26 back to files in the same format as the original source files (e.g. CSV) by another test script. The resultant decoded files can then be compared to the source files by reviewers. The decoded files include the truth-table, arithmetic operation and confirmer configuration files which were originally determined by Systems Engineers as part of the SES. The verification that those source files have been correctly converted and loaded should be agreed by Systems Engineering. The decoded files also include the I/O Vector Map which is a software design output. These files should be verified within Software Engineering.

As shown in Figure 4a, the verification process is closed loop. No qualified tools are used in the process but there must be independence in the implementation of the configuration compiler and decoder tools otherwise code that is common to both tools might mask a fault in the data. In addition, the integrity of the configuration data is checked at run-time by the target application.

Figure 4b shows the procedure for testing any functional block (e.g. a truth-table, a confirmer or an arithmetic function) of the core logic engine. The confirmer, unlike the truth-tables and arithmetic functions, stores state information in the value stored in an integrator. The output of the confirmer therefore depends on the sequence of inputs given to it in contrast to the arithmetic and logic functions where the output only depends on the current input vector.

Verifying the truth tables preferably involves exhaustively testing every possible input state of every truth table in the configuration data. For the arithmetic function verification, exhaustive testing of all possible inputs values is not proposed. In the case of a simple weighted sum with a vector of two elements there are $2^{16}$ possible values for each of the inputs, that means there are $2^{32}$ possible input combinations. It is not feasible to test such a large set of input vectors in a reasonable timescale. Instead a small subset of test cases will have to be pre-programmed into the verification script, perhaps some normal, some extreme cases, some corner cases and some repeatable but randomly generated test cases. Similarly, it is not necessary to exhaustively test all possible input sequences for the confirmation function verification, even if that were possible. However, it is necessary to demonstrate the correct threshold and saturation behaviour in response to sequences that can be derived from the configuration data.

The sequence for the test procedure shown in Figure 4b is to read the CSV source file using a read parameter test file 34. A model test script 36 which models the core logic function is then configured; the model generating an output for a given set of inputs. The I/O vector 12/14 is frozen, i.e. put in a state where the output side is not updated so that inputs to the core logic are fully under the control of the test script. The I/O vector map 18 is then read by a read I/O vector map test script 30 in order to obtain the information about where inputs and outputs reside in the I/O vector and how they should be extracted and processed. A peek/poke test script 32 is then used to route each input test vector to the correct location on the target. Thus for each input state the input values are written to the locations in the I/O vector 12/14 as prescribed by the I/O vector map 18. The model test script 36 is used to generate the expected output for the input test vector. A verify truth table script 38 is used to trigger the logic block on the target (i.e. the core logic engine 10) or we simply wait for the outputs to appear. The peek/poke test script 32 is used to capture the outputs in the I/O vector 12/14. Finally, the verify truth table script 38 compares the target outputs from the peek/poke test script 32 with those from the model test script 36.

As shown, particularly when verifying the confirmation logic blocks, the verify truth table script must be able to single-step the core-logic engine so that the confirmer block is only executed once before its outputs are checked. This is because of the state information in the confirmation function.

Furthermore, it is necessary to ensure that the confirmer-counter integrator on the target and in the model are correctly initialised and match each other. In the illustrative embodiments, the confirmer-counter can be considered an integrator since it integrates the state of its input. The set of behaviours which may be tested should include the following:

• Initial output is correct (the state of the confirmer input and integrator in the I/O Vector are dictated by the initial values in the I/O Vector Map);
• Use a sequence of consecutive TRUE inputs to check the threshold that changes the output from FALSE to TRUE;
• Continue providing TRUE inputs and check the upper saturation limit behaviour of the integrator;
• Use a sequence of consecutive FALSE inputs to check the threshold that changes the output from TRUE to FALSE;

- Continue providing FALSE inputs and check the lower saturation limit behaviour of the integrator.

Hardware and software interlocks may be used to ensure that the test-modes are not inadvertently activated during normal operation.

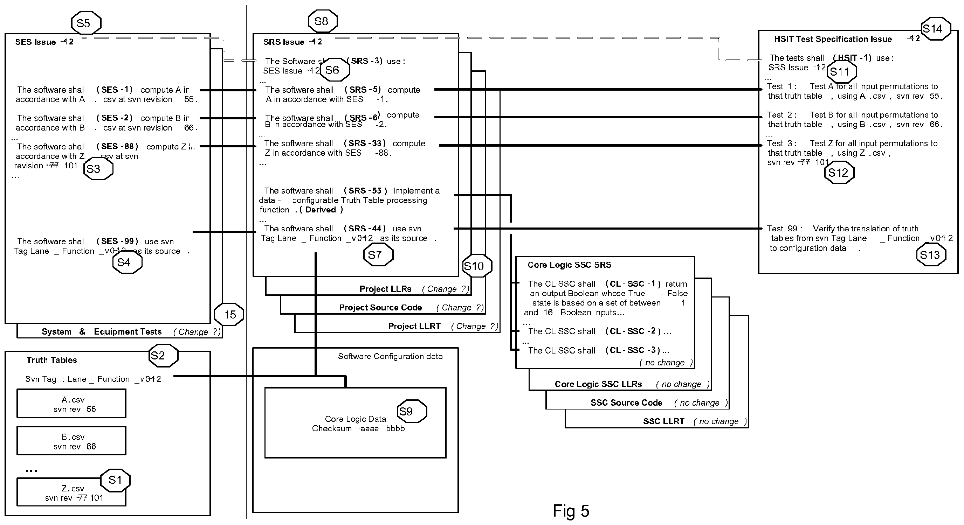

Figure 5 shows the impact of specifying requirements in truth tables on the overall testing and in particular the impact of revising one of the truth tables. As shown at step S1, the truth table for object Z is revised and is given a new tag "svn rev 101". (svn stands for subversion, e.g. Apache subversion, which is a software tool for maintaining current and historical versions of files). At step S2, the set of truth tables containing the revised table for object Z is also given a new tag "svn tag: Lane_Function_v02". In other words, the version number has been incremented by one.

The impact on the SES is shown in steps S3 to S5. Any requirements that specify the modified truth table are updated to refer to the updated revision. In this case, as shown as S3, only SES-88 refers to truth table Z and thus this is updated to state "the software shall compute Z in accordance with Z.csv at svn revision 101 ". Furthermore, at step S4, any requirements that specified the use of the tag for the set of truth tables containing truth table Z are updated. For example, SES-99 is updated to show that the new tag is being used. Finally, the issue number for the SES is updated by incrementing the version number by one at step S5.

As set out above, the aim is to ensure that the SES is strongly structured and specifies all functional requirements on the software, with allocation at processor lane level. It must specify the state of each software output in terms of all the inputs on which it is dependent, and specify what the output state is for every permutation of those inputs.

Furthermore, the aim is to ensure that SES must specify requirements in such a way that they can be flowed straight down to the SRS.

The impact of the changes to the SES on the project SRS are shown in steps S6 to S8. Firstly, the change to the SES issue number implemented at step S5 is reflected in step S6 by changing the SES issue number which is called up by the SRS. In a similar manner to step S4, any requirements that specified the use of the tag for the set of truth tables containing truth table Z are updated. For example, SRS-44 is updated to show that the new tag is being used. Finally, the issue number for the SRS is updated by incrementing the version number by one at step S8.

As shown at steps S9 and S10, there may also be changes to the software. Step S9 shows that there is a change to the configuration data based on the requirement at SRS-44 to use the tag which refers to the truth table. It is also possible as shown at Step S10 that the low level requirements for the project (Project LLRs) and the software for the Project may need to be changed to reflect the changes to the high level requirements in the SRS. Any low level requirement changes need to be flowed in the low level requirement testing.

The impact on the testing regime required to generate the necessary traceability is shown in steps S11 to S14. The tests which need to be changed are the high level and systems integration tests (HSIT). Firstly, at step S11 there is a change to SRS version which is called by the HSIT. Any tests which specifically call on the revised truth table, e.g. Test 3 in the present example, are updated at step S12. Such an update ensures that these tests use the new CSV revisions based on the new SRS (which calls up the modified CSV revisions). The final verification test (e.g. test 99 in the present example) is changed to call up the new tag of the set of truth tables containing the amended truth table at step S13. Finally, the issue number of the HSIT test cases is updated at step S14.

The set of HSIT test cases verify the functional requirements in the Project SRS. The tests are typically run on target hardware loaded with the appropriate version of the software. Verification of the project software provides evidence that every functional block in the software, e.g. every core logic truth table, confirm function and custom logic function is correctly implemented against its SRS requirement.

The first requirement is a derived requirement which is used to justify the use of the SSC and is also the single source requirement to which all the mandatory requirements in the SSC SRS are traced. For example as shown in Figure 5, the Project SRS specifies that "the software shall (SRS-55) implement a data-configurable truth table processing function". As shown by the arrows, all the requirements in the Core logic SRS trace back to this derived requirement in the Project SRS. The second requirement contains the configuration data associated with the SSC, i.e. the data that will be used by the Project to program the behaviour of the SSC. In Figure 5, this is shown as "the software shall (SRS044) use svn tag lane_function_v02 as its source". This requirement in the SRS traces back to the corresponding requirement in the SES. There may also be traces from the Project's software configuration data to this requirement. However, there are no traces to this requirement from the SSC.

The consequences of this separation of the Project SRS from the SCC SRS are shown in Figure 5 because as illustrated no changes are made to the SRS, LLR or source code of the shareable software component referred to as the core logic engine. As part of the SSC development, SSC LLRs will be specified and traces put in place between the SSC LLRs and SSC HLRs. Similarly the SSC code will be written and traces made between the SSC code and SSC LLRs. All these traces serve the normal function of supporting verification, change impact assessment and review of the SSC.

During development of an SSC, a set of "draft" HSIT test cases will be prepared, to verify the SSC meets its HLRs. These tests are considered "draft" because until an SSC is used in earnest in a Project application, and is running on target hardware, formal HSIT is not meaningful. The SSC test cases will be written such that they are configurable, i.e. to be data driven. Then, when the SSC is used by a particular project, the SSC test cases will be configured in a way which is meaningful in the context of the project-specific implementation while still providing verification coverage of the SSC HLRs against which the test case was originally written. Each project must plan and demonstrate how it will achieve verification coverage of the SSC HLRs for the components it uses. Preparation for achieving this must be made by creating an appropriate set of configurable "draft" HSIT test cases for each SSC.

A final stage shown as step S15 is to possibly change the system and equipment tests. It is noted that the HSIT test which tests the impact of the software excludes end-to-end equipment level testing. Such a test remains in the scope of the systems team.

Thus as shown in Figure 5, the validation and testing for a complex system can be simplified by using a shareable software component such as the core logic engine. This reduces the amount of effort required across the projects in low level verification, e.g. if something changes in the SES. Shareable components still require low level requirement tests and results to be achieved on the target processor but where this target processor (e.g. core logic engine) remains constant across projects, the results remain applicable. Therefore the test cases and the test results can be reused. Equally, if the requirements, design and code have all remained unchanged (such as when using a shareable component), the associated reviews (e.g. requirements/design, design/code etc.) all remain valid.

Another change to facilitate testing was to collate all inputs into a single data structure and collate all outputs into a single data structure. This is shown in Figure 3a which is discussed in detail above. This provides a consistent interface for the outputs of all software components associated with input processing and effectively decouples the output computation (the control function) from the various heterogeneous inputs (GPIO, proximity sensors, CAN, ARINC etc.). This aggregation also facilitates testing by providing a common test interface for input processing. The control processing is then decoupled from the heterogeneous outputs (GPIO, CAN, ARINC etc.). It also provides a consistent interface for the inputs to the output drivers. Issues such as double-buffering to handle process rate differences and confirmation logic for fault detection and clearing can be dealt with in one place rather than scattered throughout the application code. Similarly, double-buffering of the outputs provides a time-consistent set of outputs for the drives to send.

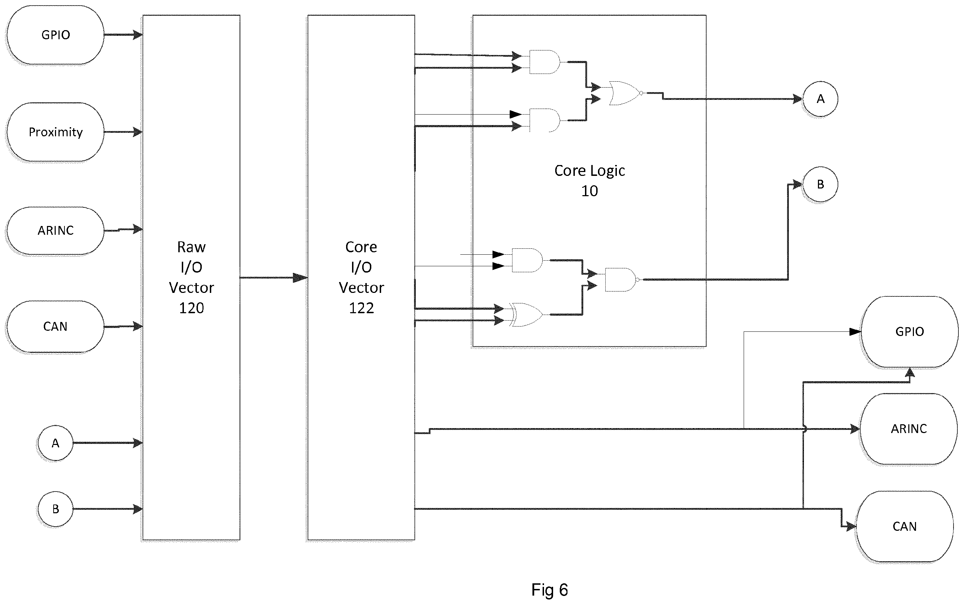

Figure 6 shows one adaptation of the system of Figure 3a which is suitable in circumstances in which some of the control system outputs are used as inputs to other logical or control functions, perhaps for output limiting, fault detection, or consistency checks, or to prevent duplication within logic implementation. The adaptation is also suitable when data items collected from inputs are transmitted, for instance over ARINC, to provide context information to other systems. Figure 6 shows that the input and output vectors are replaced with a pair of combined input and output aggregate data structures termed the I/O Vector. The I/O vector is double buffered and hence there is a raw I/O vector 120 and a core I/O vector 122.

The double-buffering of the I/O Vector ensures that a time-consistent snapshot of the inputs and outputs is taken as the input to the core logic component and also supplied to the output drivers. A typical timeframe for the double buffering is to take a snapshot of all inputs every 20ms (the proximity sensing software update period) and execute the logic functions on those newly available inputs.

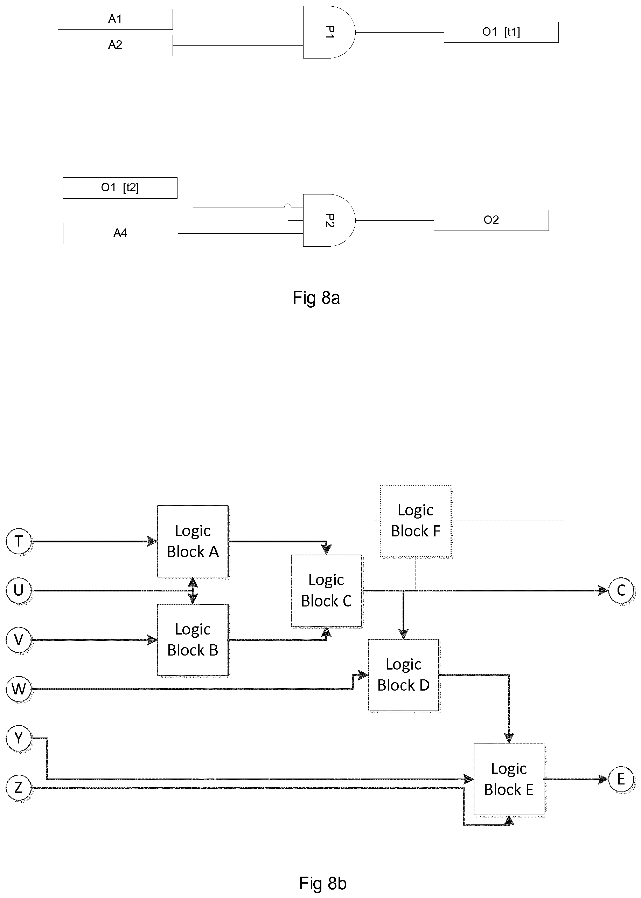

In the example of Figure 3b and 3c, one of the inputs is whether or not there is a fault in the steerby wire system. This fault is evaluated by considering another truth table. Similarly, the example in Figure 3c, there are several inputs which are the results of the evaluations of other truth tables. The logic functions which are processed in Figures 3b and 3c are thus examples of cascaded logic. In the architecture shown in Figure 6, all inputs to the core logic are captured in a snapshot of the I/O Vector and all of its outputs are written back to the I/O Vector. In order to avoid the possibility of race conditions the outputs are written back to the Raw I/O Vector and are therefore only available in the next snapshot, made for the next evaluation of the core logic function. However, when cascaded logic functions are implemented in this way a problem can arise in the implementation caused by an inconsistency in the inputs to the cascaded stages. As an alternative to the examples in Figures 3b and 3c, consider the simple example shown in Figure 8a. Output O1 is computed by logical function P1 from inputs A1 & A2. Output 02 is computed by logical function P2 from inputs A2, O1 and A4. When output O1 is computed it becomes available for use in P2 on the next logic engine update cycle. The P2 function is actually implementing a truth table that has inputs A1, A2 and A4.

In the arrangement of Figure 8a, the value of O1 used as an input to P2 is from the previous cycle therefore the value of the A2 input used to compute O1 is one cycle older than the value of A2 which is also an input to P2. In addition, the values of A1 and A2 used to compute O1 as an input to P2 are one cycle older than the A4 input. Thus the truth table is not implemented correctly. It may be possible to correct the first situation by using a different factorization at the expense of adding extra logic blocks but this cannot be applied to the second situation.

One solution is to impose the rule that logic outputs cannot be directly used as inputs to another logic block. This rule ensures that all of the logic blocks are purely combinatorial and also ensures that the outputs are not sensitive to the order of evaluation of the logic blocks. Having purely combinatorial logic blocks allows for simpler and exhaustive testing compared to any implementation that has hidden state. If the logic functions depended on the order of evaluation then the review and modelling process would be very complex and maintainability would be severely compromised. Any solution must therefore use logic block outputs on the next logic engine cycle.

We are aiming for an implementation which should facilitate exhaustive testing of individual logic blocks: this implies that the test environment allows every possible set of input states to be set up and the output state to be captured. In order to reliably set up the inputs states the test scripts must be able to either disable changes to the I/O Vector either by preventing the copy from the Raw I/O Vector to the (core logic) I/O Vector or by preventing writes to the Raw I/O Vector.

The implementation should also provide the capability to test the correct function of the cascaded logic blocks to ensure that the coupling between blocks has been correctly implemented in the configuration parameters. This requirement implies that some data propagates from the Raw I/O Vector to the I/O Vector when the core logic function is being tested. This requirement appears to conflict with the requirement to reliably control the input state from the test script.

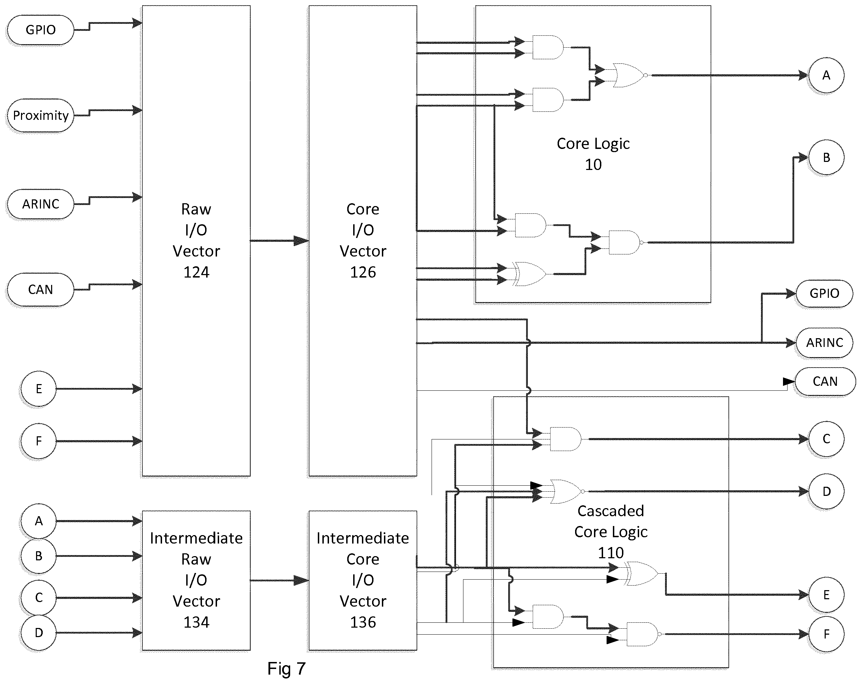

Figure 7 shows a variation of the arrangement in Figure 6 which addresses problems in keeping inputs consistent once logic blocks are cascaded. As shown in Figure 7, the double buffered I/O Vector is partitioned into a public section 124,126 for genuine inputs and outputs (in the above example A1, A2, A4 and 02) and a private section 134,136 for holding intermediate logic variables, namely logic block outputs that can be fed back as inputs (e.g. O1). These intermediate variables should only be written and read by the core logic function and are not safe for other components. Ideally they will be hidden or at least obscured from the other components, in contrast to the rest of the I/O Vector which is publically visible throughout the application. An extra function is required to only update the intermediate logical variables. This function is termed cascaded core logic 110. Confirmation is unlikely to be required for intermediate values, they are simply temporary variables.

The public section of the I/O Vector contains a snapshot which is taken before a first pass through the logic table evaluation. This snapshot is then held constant as the core logic iterates through the cascaded logic blocks 110 as many times as necessary to propagate the results through the last cascaded block. In other words, the inputs are effectively temporarily frozen for a fixed number of iterations of the core logic engine. The logic blocks are evaluated and the outputs fed back into the I/O Vector.

At the next logic evaluation the previous cycle logic outputs for intermediates values are made available as inputs whereas the genuine inputs remain frozen. Thus, the private section 134,136 containing the intermediate logic variables is updated on each of these passes through the logic. Repeated iterations through the logic blocks are done in this way until the signals have propagated through the cascaded logic blocks and the outputs have stabilised. The last pass puts the final results of the logic blocks back into the public I/O Vector 124,126 where they can be accessed on the next cycle. In other words, the genuine system outputs (e.g. 02) are made available at the next snapshot.

As described above, in order to exhaustively test the logic blocks implemented in the core logic engine it is necessary to execute each logic block with every possible set of input values. In general, it will not be possible to generate all possible inputs states from the unit's external interfaces so an instrumentation method is required. As described above in relation to Figure 4b, the I/O Vector update is disabled completely so that test vectors can be poked in, the results captured and then compared with suitable models. Where cascaded logic blocks are used to implement a factorized logic function, the function of the entire cascade must be tested to ensure that the linkage between logic blocks (i.e. the intermediate variables) is functioning correctly. Thus two levels of I/O Vector freezing are required.

A suitable solution would be to add a variable (e.g. isIOVectorFrozen) which has three states:

- Enable all I/O Vector updates
- Enable only intermediate variable updates (testing cascades)
- Disable all I/O Vector updates

The variable can then be accessed via peek-poke to provide exclusive access to the I/O Vector required by the test scripts.

Such a variable has the capability to disable the main function of the unit so careful consideration must be given to issues such as SEU and inadvertent activation. One solution proposed to this problem is to only allow the I/O Vector to be frozen if the engineering peek-poke interface is active. This issue is related to the issue of inadvertent activation of the engineering peek-poke interface itself. This may be achieved by disabling the engineering interface on the target until it receives a key from the test PC. In order to make the probability of interpreting noise as reception of a valid key it should be at least 32 and preferably 64 bits long. The access function that returns whether the engineering interface is enabled should check the key each time, rather than storing the result in a local Boolean variable, to improve SEU immunity. The key cannot be stored anywhere in the target software so it needs another mechanism for checking for correct reception e.g. by storing the bit-wise inverse (one's complement) or a digest such as a CRC.

The I/O Vector update code will require a test along the following lines:

```
if ((!(pp_isEnabled() && isIOVectorFrozen)) &&
  IOTimers[config->iotimer].output)
  {
```

```
  .. copy from Raw to I/O Vector & perform fault confirmation
 }
```

Here pp_isEnabled() returns a Boolean indication that the engineering interface has been enabled.

Figure 8b shows a more complex set of cascaded logic blocks having a maximum cascade depth (i.e. maximum precedence rank) of four so that the logic passes through four evaluation loops to allow the outputs to propagate all the way through to output E. The nodes T - Z represent logical inputs, logical blocks A to E represent individual logical functions implementing a single output truth table. Nodes C and E are the logical outputs from this cascade. The logical variables A, B and D are outputs from one truth table and inputs to another.

The I/O Vector Map would contain entries for all of A to E and T to Z. The logic engine would start by reading in the I/O Vector Map (e.g. using a configuration tool) and would then make a first pass over all of the CSV files that contain the truth tables. At the end of that pass it could establish, for all the entries used in the above logic implementation whether it is a logical input only (T to Z), logical output only (E), or both an input and output (A to D).

Having established the nature of each node, it is then possible to recursively compute the precedence rank of each logic block e.g. the precedence rank of E cannot be calculated without first knowing the precedence rank for D. However, if we continue the recursion we get to A and B which can be assigned precedence rank 0 since their inputs are all logic engine inputs, we assign C a precedence rank one higher than its inputs so it is 1, likewise D is 2 and E is 3.

Having established the precedence rank associated with each truth table we now no longer need to evaluate all of them four times. All blocks with a precedence rank of 0 i.e. A and B are evaluated first followed by C, then only D and finally only E. Thus the total number of logic blocks calculated is only 5 and not 20 but they are calculated with the correct inputs. We can store this precedence rank as an extra field in the truth table data structure. This gives us a possible structure for block E as follows:

| field | offset | value |
|---|---|---|
| output | 0 | 4 |
| Depth/precedence rank | 2 | 3 |
| length | 4 | 3 |
| inputs | 6 | 24 |
| | 8 | 25 |
| | 10 | 3 |
| lookup | 12 | 0xC2 |

The output is in the 5th row of the I/O Vector Map table so its index would be 4 (assuming C-style indexing from zero). The precedence rank is three as explained above. The number of inputs is three. The inputs Y and Z are in the 24th and 25th rows of the I/O Vector Map so the indices are 24 and 25. This very small truth table can be described by 7 integers: an output index, the precedence rank, a length, three input indices and a C2 bit lookup.

In variants however, not all integers may be needed. In another embodiment the "precedence rank" field for example may not need to be stored as it may not be needed when dependencies can be calculated to order the functional elements such that they were evaluated at the correct sequence for the cascade to function.

The set of I/O Vector Map entries that are both inputs and outputs to truth tables is exactly the same as the set of intermediate logical variables that must be passed through the I/O Vector double-buffer on each pass through the logic evaluation. We can therefore form the list of the intermediate logical values and add that to the logic configuration. The logic engine can request that the I/O Vector component copies across these specific bits in order to implement the intermediate logical variables with the rest of the I/O Vector entries unchanged. The list can be simply serialised as a length followed by the set of I/O Vector Map indices.

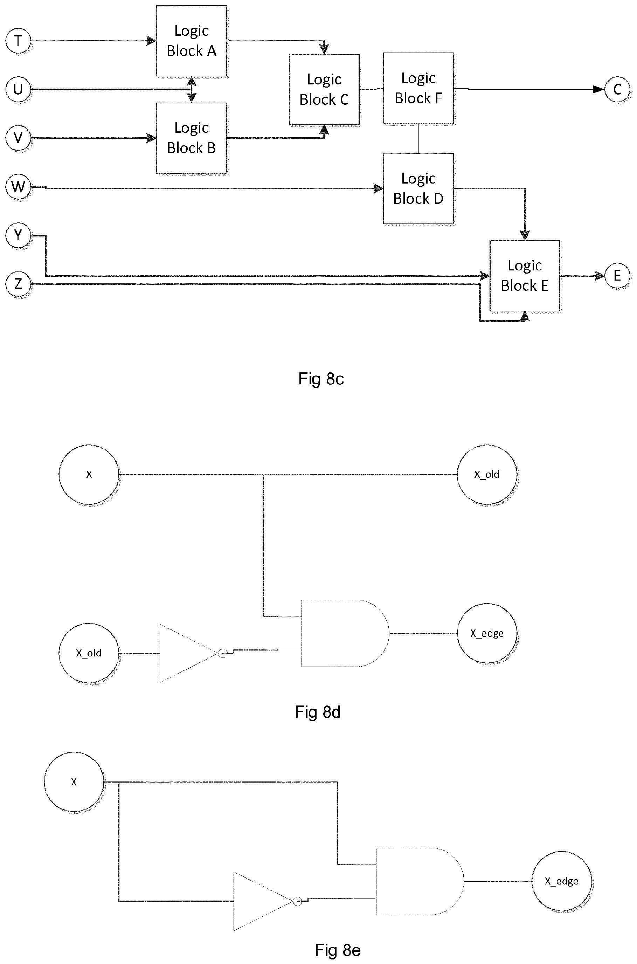

There is one problem with this approach: logic variable C is both an intermediate variable and an output. Its value may vary during the execution of the logic engine whereas all outputs are supposed to form a consistent set after the I/O Vector snapshot is taken for presentation to the logic engine and output drivers. For this reason we will have to enforce a rule and confirm by review that no output from the I/O Vector (to ARINC, GPIO etc.) is also an input to other logic blocks. The situation can be remedied by adding another dummy logic block F (as shown in Figure 8c) that merely passes on the output of C unchanged. The output driver can use the output of F safely instead, as part of the consistent set, delayed by one core logic cycle.

Figure 8d shows an example of where sequential (or cascaded) logic is required, namely in edge-detection. To implement an edge detector we can define a simple logic equation: X_edge = X & (!X_old)

Where
X is the variable we wish to detect a FALSE-TRUE transition on,
X_old is the previous value of X and
X_edge is only true on a rising edge of X.
the ampersand represents a logical AND operation,
the exclamation mark indicates logical inversion.

The logic circuit for this equation is shown in Figure 8d. Three logical variables are required in the I/O Vector Map in order to implement this function, namely, input X together with X_old and X_edge which are derived from the input X. Furthermore, two logic truth-tables are required, one to create X_old and the second to detect the edge. Using the convention of an empty column to separate inputs from outputs these two tables are shown below:

| X | | X_old |
|---|---|---|
| 0 | | 0 |
| 1 | | 1 |

| X | X_old | | X_edge |
|---|---|---|---|
| 0 | 0 | | 0 |
| 0 | 1 | | 0 |
| 1 | 0 | | 1 |
| 1 | 1 | | 0 |

However, as illustrated in Figure 8e, these two tables will not actually implement an edge-detector unless additional changes are made. The core engine (e.g. the configuration compiler for the core engine) will recognise X as an input and X_edge is an output (which may be an input to further logic). Moreover, using the arrangement of Figure 7, X_old which is both an output and input to truth-tables will be recognised as an intermediate logic variable. Accordingly, the core engine will recognise the data dependency and *cascade* these two functions. In the cascade version X_old simply follows X and thus the logic is incorrectly implemented as shown in Figure 8e. Accordingly, the output will always be FALSE.

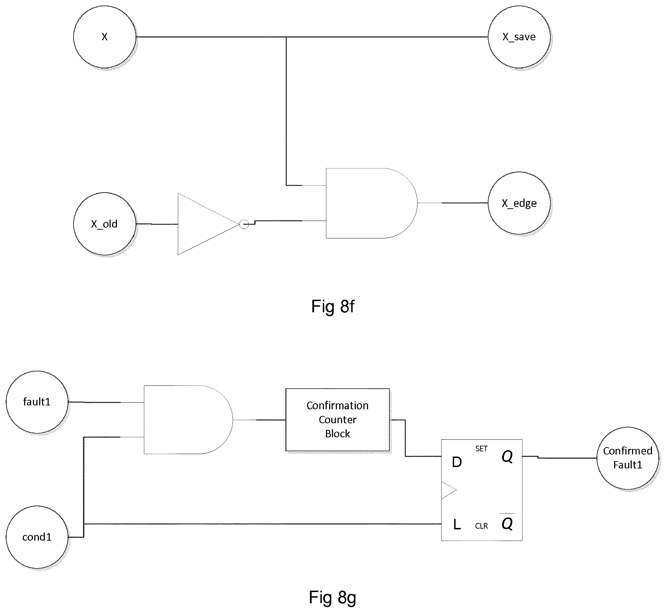

Figure 8f shows the use of an alias in I/O vector map to prevent the configuration compiler from recognising the data dependency and cascading the logic functions. X-_old which is the direct output from X is replaced with an alias X_save. The two variables X_save and X_old live in the same bit-field within the I/O Vector. X_save is now just an output and X_old is just an input therefore the logic functions are not cascaded. The double-buffering within the I/O Vector ensures that the value of X_old really is delayed by one cycle. When we consider that X_save is some function of X in the current cycle and X_old is the same variable but held over for one cycle it seems much more reasonable to give them different names. During data dictionary creation the labels X, X_old and X_edge will be created and given meaning. It will also be necessary to create X_save and indicate that it is an alias for X_old.

Figure 8g shows a second example of where sequential (or cascaded) logic is required, namely a D-type latch. The required function is to gate a fault detection with a pre-condition (a simple AND) but also to latch the output when the pre-condition is removed. This is used to latch a fault result until new data is available to allow it to be set or cleared. To implement a D-type latch we use the following Boolean expression:

$$Q = (!L \ \& \ Q) + (L \ \& \ D)$$

Here the plus sign indicates logical OR operation.

Thus the output follows the D input if the latch input L is TRUE otherwise the output remains the same as it was. Q is both an input and an output. If we use an alias, e.g. Q_old, the configuration compiler will not confuse the previous value with the newly computed one when working out where this logic fits in the cascade. The following variables may thus be defined in the data dictionary:

| Variable | Meaning |
|---|---|
| Fault1 | The raw fault indication |
| Cond1 | A pre-condition for detecting fault1 |
| Gated_Fault1 | Logical AND of Fault1 and Cond1 |
| Conf_Fault1 | Output of the confirmation counter |
| Confirmed_fault1 | Output of the D-type latch |
| Confirmed_fault1_old | Alias of Confirmed_fault1 holds previous value |

The truth-table for the D-Type latch is then simply:

| Cond1 | Conf_Fault1 | Confirmed_fault1_old | | Confirmed_fault1 |
|---|---|---|---|---|
| 0 | 0 | 0 | | 0 |
| 0 | 0 | 1 | | 1 |
| 0 | 1 | 0 | | 0 |
| 0 | 1 | 1 | | 1 |
| 1 | 0 | 0 | | 0 |
| 1 | 0 | 1 | | 0 |
| 1 | 1 | 0 | | 1 |
| 1 | 1 | 1 | | 1 |

If other logic functions are using both the Confirmed_fault1 and Confirmed_fault1_old variables then an extra variable (e.g. Confirmed_fault1_save) will have to be created to store the delayed value as Confirmed_fault1_old would be overwritten as soon as Confirmed_fault1 is calculated in order to propagate the intermediate logic variable into the next logic block in the cascade. This is essentially the same problem as was outlined in the edge detection example and is solved in the same way. In this example we could create an extra logical variable Confirmed_fault1_save which is computed using a "delay" truth-table from Confirmed_fault1. Confirmed_fault1_old is now an alias for Confirmed_fault1_save and will hold the previous value of Confirmed_fault1 throughout the whole of the cascade evaluation.

A third example of where sequential (or cascaded) logic is required is a JK latch. An SR latch keeps its output in the same state unless the S input is TRUE, in which case the output is TRUE (set), or the R input is TRUE in which case the output is FALSE (reset). The S and R inputs are not normally allowed to both be TRUE. The behaviour of the JK latch is similar except that the output toggles when both of the S and R inputs are TRUE. The logic equation can be written as follows:

$$Q = (!S \,\&\, !R \,\&\, Q) + !(!S \,\&\, R) + (S \,\&\, !R) + (S \,\&\, R \,\&\, !Q)$$

We can implement this using logical variables S, R, Q and Q_old. Again, Q and Q_old can be aliases so long as they are not used together anywhere else in the logic, otherwise an extra storage location will be required to hold the delayed term & Q_old becomes an alias for that delayed variable. The truth table is thus:

| S | R | Q_old | | Q |
|---|---|---|---|---|
| 0 | 0 | 0 | | 0 |
| 0 | 0 | 1 | | 1 |
| 0 | 1 | 0 | | 0 |
| 0 | 1 | 1 | | 0 |
| 1 | 0 | 0 | | 1 |

(continued)

| S | R | Q_old | | Q |
|---|---|-------|---|---|
| 1 | 0 | 1 | | 1 |
| 1 | 1 | 0 | | 1 |
| 1 | 1 | 1 | | 0 |

The control function of the core logic (or other SSC) transforms the inputs into outputs. In some applications a simple set of logical functions are likely to be sufficient. In others some arithmetic operations may be required especially for BITE fault detectors. Other control systems may require more complex control strategies, such as PID controllers.

It is likely that the outputs of arithmetic blocks will be used as inputs to logic functions. In order to prevent race conditions between outputs of logic blocks and outputs of arithmetic blocks the arithmetic blocks must be used in the cascade depth calculation for a logic block. If arithmetic blocks are to be chained together then a cascade depth must be calculated and included in the data. The arithmetic function data files must therefore be compiled into the configuration data in combination with the logic function data.

The structure for truth table for the arithmetic evaluation might look like the following:

| field | Meaning |
|-------|---------|
| output | I/O Vector Map entry used to write output logical value |
| Depth or precedence rank | Position in cascade of logic and arithmetic blocks |
| shift | Right-shift applied to scalar product result |
| threshold | Shifted scalar product is compared to this to calculate output |
| length | Number of inputs |
| Input1 | I/O Vector Map entry used to fetch first input value |
| Weight1 | Scalar for first input value |
| Input2 | I/O Vector Map entry used to fetch second input value |
| Weight2 | Scalar for first second value |
| ... | |

The bit-fields fetched as inputs may have to be sign extended or at least treated as signed values for the purposes of the scalar product calculation. Some of the weights are likely to be negative so signed multiplies, arithmetic shifts and signed comparisons are required.

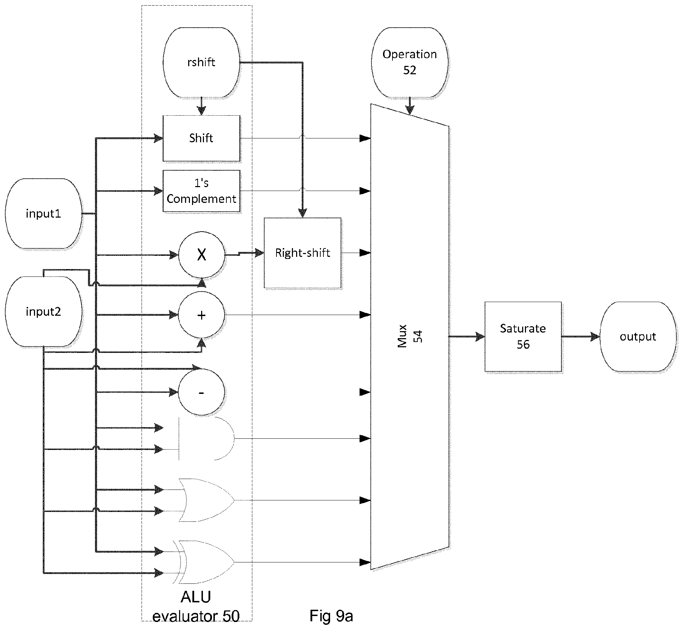

Figure 9a shows one example of the internal modules for the core logic processing engine. The modules comprise an operation module 52 which processes the truth tables defining the combinatorial logic and evaluates the truth-table logic equations. There is also an ALU evaluator 50 which in this arrangement comprises addition, subtraction and multiplication of two inputs, together with Bit-wise AND, OR and XOR of two inputs, complement and shift (as detailed in the table below). There may also be a confirmation-counter evaluator module (not shown). The confirmer-counter may be considered an integrator since it integrates the state of its input. Other components include a multiplexor 54 and a saturate 56 which are explained in more detail below.

The table below illustrate the arithmetic and logic operations which should be supported for processing in the core logic engine. These are dominated by comparisons between values stored in the I/O Vector in order to trigger BITE fault detectors.

| Required Operation | Description |
|--------------------|-------------|
| ADD | Addition of two I/O Items (I/O Vector bit-fields) |
| SUB | Subtraction of two I/O Items |
| MUL | Product of two I/O Items |
| AND | Bit-wise AND of two I/O Items |

(continued)

| Required Operation | Description |
|---|---|
| OR | Bit-wise inclusive OR of two I/O Items |
| XOR | Bit-wise exclusive OR of two I/O Items |
| COMPLEMENT | Bit-wise inversion of an I/O Item |
| SHIFT | Bit-shift of an I/O Item |

At least one reason for the operations is set out below. It will be appreciated that there may be other reasons for the operations. The need for addition is to detect faults such as (Va + Vb) > limit. The subtraction is needed to compare two values stored in the I/O Vector against each other rather than against predetermined constants. The multiplication operator is needed in the implementation of the steering control algorithm. The logical operations are to support logical selection with data wider than a single bit e.g. a multiplexor. It is either impossible (add and subtract) or at best unwieldy (e.g. 16 sets of individual bit operations) to achieve these functions with the existing logic and confirmer operations.

It is likely that some of the values being compared have come from different sources e.g. different sensors or received serially from different equipment, thus the scaling and encoding scheme might be different. A flexible scheme would allow scaling of both of the inputs before the subtraction.

The I/O Vector is limited to storing 16-bit data. Multiplication is likely to produce a result that has greater precision than is available for storing the result so a means should be provided to select the significant portion of the result. The addition, subtraction, multiplication and shift operations may cause overflow of the signed 16-bit storage for the I/O items. Some means of preventing or mitigating this should be found.

Not all of the above operations may be implemented. For example, in one implementation the following subset of operations is implemented:

| Operation | Encoding | Description | Formula |
|---|---|---|---|
| DOT | 0 | Weighted-addition of two I/O Items (I/O Vector bit-fields) | $SAT(((A * k_1) + (B * k_2)) >> k_3)$ |
| AND | 1 | Bit-wise AND of two I/O Items | $SAT((A \& B) >> k_3)$ |
| OR | 2 | Bit-wise inclusive OR of two I/O Items | $SAT((A \mid B) >> k_3)$ |
| XOR | 3 | Bit-wise exclusive OR of two I/O Items | $SAT((A \wedge B) >> k_3)$ |
| MUL | 4 | Product of two I/O Items | $SAT((A * B) >> k_3)$ |

The DOT operation is derived from the requirement for subtraction with arbitrary scaling on both of the inputs which suggests an expression of the following type:

$$Y = (A * k_1) - (B * k_2)$$

Where A and B are inputs, Y is an output, $k_1$ and $k_2$ are scaling factors.

Implementing this in integer arithmetic will require a shift after the summation. The result, after the shift, should be limited to the range of the output bit-field. The range of the output bit-field depends on its length and whether the output bit-field contains signed or unsigned data. Although they are incorrect saturated values are far less wrong than wrap-around values.

We also note that since the multiplies are signed, $k_2$ could be negative and so we can formulate the expression as:

$$Y = SAT(((A * k_1) + (B * k_2)) >> k_3)$$

Here we have introduced the shift constant $k_3$ and the SAT function to represent saturating to the range of the output bit-field. This formula can be used to perform the simple addition operation ($k_1$ and $k_2$ are both unity, $k_3$ is zero) and subtraction operation ($k_1$ = 1, $k_2$ = -1, $k_3$ is zero) but with the flexibility to scale both inputs differently. All three constants operation ($k_1$, $k_2$ and $k_3$) are signed 16-bit integer values, though the useful range for $k_3$ is only 0 <= $k_3$ <= 31 and the

more limited range of 0 <= $k_3$ <= 16 is still sufficient to ensure that the result can be stored in the output without saturation.

A right- shift operation can also be achieved by using this weighted-add formula and setting $k_1$ = 1, $k_2$ = 0, and $k_3$ to the desired shift. Left shifts can be achieved by appropriate selection of the scaling factors e.g. for left-shifting A by n bits use $k_1$ = $2^n$, $k_2$ = 0. There is therefore no need for a separate shift operation.

The multiply operation can be implemented in a similar manner:

$$Y = SAT((A * B) >> k_3)$$

The complement operation can be implemented with an XOR with all ones (0xFFFF). An entry may be made in the I/O Vector to hold this value e.g. io_all_ones. In safety critical systems this value will have to be continuously refreshed to mitigate against corruption by SEU (single event upset). This can be done using the existing io_zero and io_unity items by subtraction: io_zero - io_unity.

The saturation operation takes more computation than selection as does the shift of a 32-bit integer on the dsPIC. It therefore makes sense to compute the weighted add and product results, select the appropriate result and apply the shift and saturation at the end. Ordering the operations in this way means that the bit-wise logical operations also have an optional shift applied to them and, less usefully, the result is saturated to the range of the output field.

In the case of bit-wise operations a check should be done as part of the configuration compilation process to ensure that the output bit-field is large enough to contain the result of the operation.

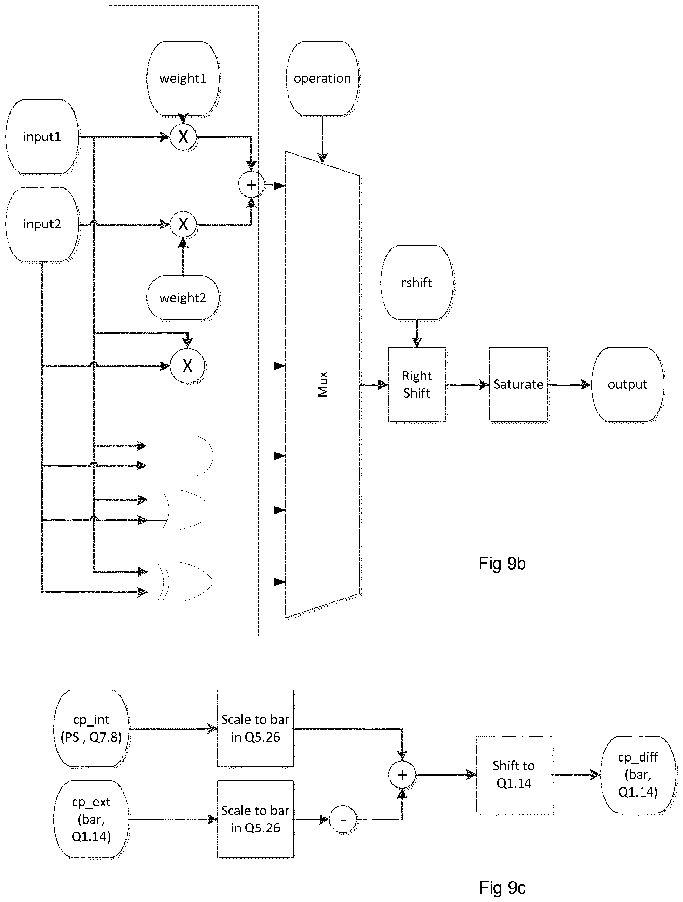

Figure 9b is a variation on the arrangement in Figure 9a. In this case, the ALU evaluator comprises a weighted sum of two inputs, a product of two inputs together with bit-wise AND, OR and XOR of two inputs. In a similar manner to the data structure described above for the truth tables, the data structure for the implemented arithmetic operations (ALU) may be specified as:

| field | Meaning |
|---|---|
| output | I/O Vector Map entry used to store output value |
| operation | Enumeration representing the operation required |
| input1 | I/O Vector Map entry used to fetch first input value |
| input2 | I/O Vector Map entry used to fetch second input value |
| weight1 | Scalar applied to first input value ($k_1$) |
| weight2 | Scalar applied to second input value ($k_2$) |
| rshift | Right-shift applied to the selected result ($k_3$), 0..16 |

Three I/O Vector Map entries are used to specify the output and both of the inputs for each function. The operation is an enumeration as shown in the "Encoding" column specifying the operations, e.g. the enumeration for DOT is zero. The first two constants, weight1 and weight2 are used in the dot-product (weighted add) operation described above. For other operations they are unused and should be set to zero. The third constant, rshift, acts on all results regardless of the operation selected.

Figure 9c illustrates one example of how the ALU function may be used, e.g. to calculate cabin pressure differential. In this example we want to calculate the difference between the internal and external air pressure. Different thresholds and tests can then be performed on the calculated value. The calculation is made more complex by the fact that the units and scaling of the inputs are different. The following table shows the units and encoding for the inputs and outputs of this function.

| name | meaning | i/o | units | format |
|---|---|---|---|---|
| cp_int | Internal cabin pressure | input | PSI | Q7.8 |
| cp_ext | External cabin pressure | input | bar | Q1.14 |
| cp_diff | Cabin pressure differential | output | bar | Q1.14 |

The sum-of-products before shifting is an intermediate format, a suitable choice of units and scaling would be to use bar encoded as Q5.26. Figure 9c shows how cp_diff is calculated. Initially both inputs are scaled. Converting from Q5.26 to Q1.14 implies right-shift by 12. The multiplier for cp_int is formed by taking 1 bar encoded as Q5.26 i.e. $2^{26}$ and dividing by the value of 1 bar converted to PSI and encoded as Q7.8. The formula for this is as follows:

$$weight1 = round(2^{26} / (14.5037738 * 2^{8})) = 18074$$

The multiplier for cp_ext is simply $-2^{12}$ i.e. -4096. An example CSV configuration table for this ALU function is shown below.

| output | operation | input1 | input2 | weight 1 | weight 2 | rshift | comment |
|---|---|---|---|---|---|---|---|
| cp_dif f | dot | cp_int | cp_ext | 18074 | -4096 | 12 | Differential cabin pressure in bar encoded as Q1.14 |

The corresponding I/O Vector Map entries for the inputs and output is shown below:

| name | index | position | length | threshold | initial | comment |
|---|---|---|---|---|---|---|
| cp_int | 4 | 0 | 16 | 1 | 0 | Internal cabin pressure in psi encoded as Q7.8 |
| cp_ext | 6 | 0 | 16 | 1 | 0 | External cabin pressure in bar encoded as Q1.14 |
| cp_diff | 7 | 0 | 16 | 113 | 0 | Differential cabin pressure in bar encoded as Q1.14 threshold pressure >= 0.1psi ($2^{14}$ * 0.1 / 14.504) |

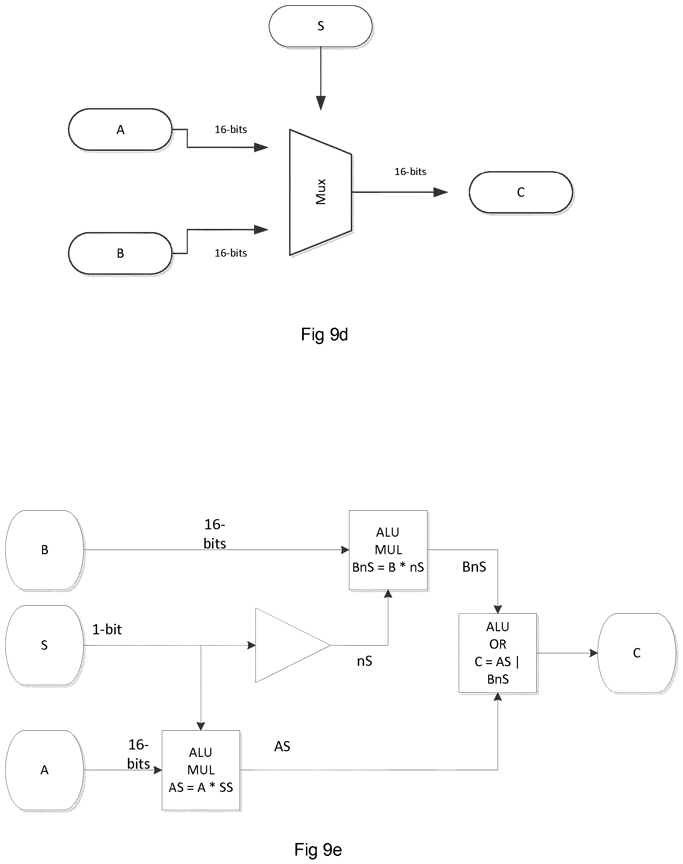

Figure 9d shows a second example; a multiplexor selecting between 16-bit inputs. This could be useful for selecting data that has multiple possible sources e.g. different ARINC busses. A and B are the inputs, C is the output and S is the selector.

A single bit multiplexor can be implemented as a simple three input truth-table that embodies a logic equation like the following:

$$C = (A \& S) | (B \& (!S))$$

One option for the implementation is to have 16 single bit multiplexors, each picking a single bit from the A and B inputs and writing a single bit to the C value. Although feasible this is inefficient in terms of memory and processing and also is not easy to maintain.

Figure 9e shows how the 16 bit multiplexor of Figure 9d can be implemented using ALU functions by implementing the equivalent formula using multiplications:

$$C = (A * S) | (B * (!S))$$

The implementation is described below

| Variable | Calculation | Comment |
|---|---|---|
| AS | AS = A * S | A is selected |
| nS | nS =!S | Complement of S implemented with truth-table |
| BnS | BnS = B * nS | B is selected |
| C | C = AS | BnS | Output is result of bit-wise inclusive OR |

An example configuration table for these ALU functions is shown below. This may be written as a CSV file, e.g. AO1 and tested as described in relation to Figure 4a.

| output | operation | input1 | input2 | weight1 | weight2 | rshift | comment |
|--------|-----------|--------|--------|---------|---------|--------|---------|
| C | or | AS | BnS | 0 | 0 | 0 | AS \| BnS |
| AS | mul | A | S | 0 | 0 | 0 | A * S |
| BnS | mul | B | nS | 0 | 0 | 0 | B * (!S) |

The corresponding I/O Vector Map entries for the inputs and output are shown below.

| name | index | position | length | threshold | initial | comment |
|------|-------|----------|--------|-----------|---------|---------|
| A | 12 | 0 | 16 | 1 | 42 | mux input |
| B | 13 | 0 | 16 | 1 | 0x42 | mux input |
| C | 14 | 0 | 16 | 50 | 0 | mux output |
| S | 15 | 0 | 1 | 1 | 0 | mux selector |
| nS | 15 | 2 | 1 | 1 | 0 | complement of S |
| AS | 18 | 0 | 16 | 1 | 0 | A * S |
| BnS | 19 | 0 | 16 | 1 | 0 | B * nS |

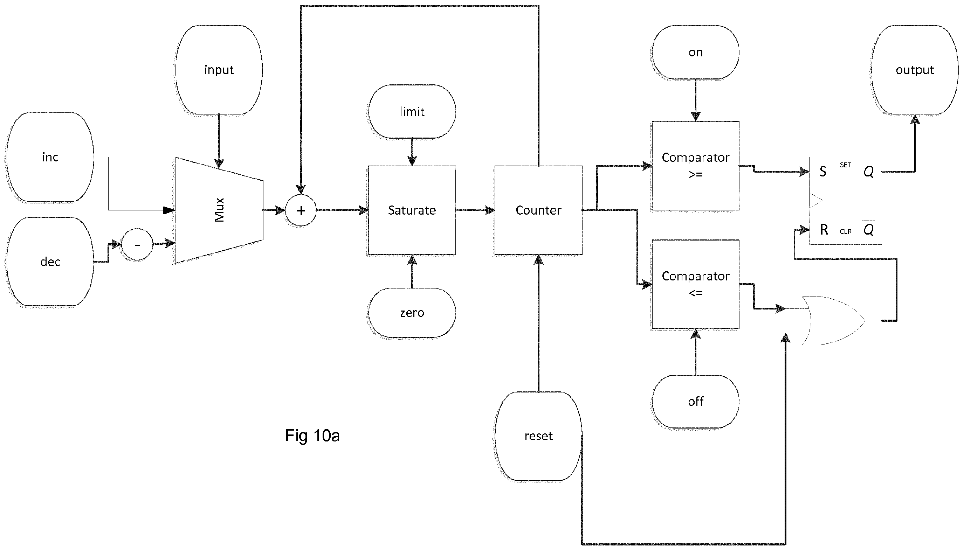

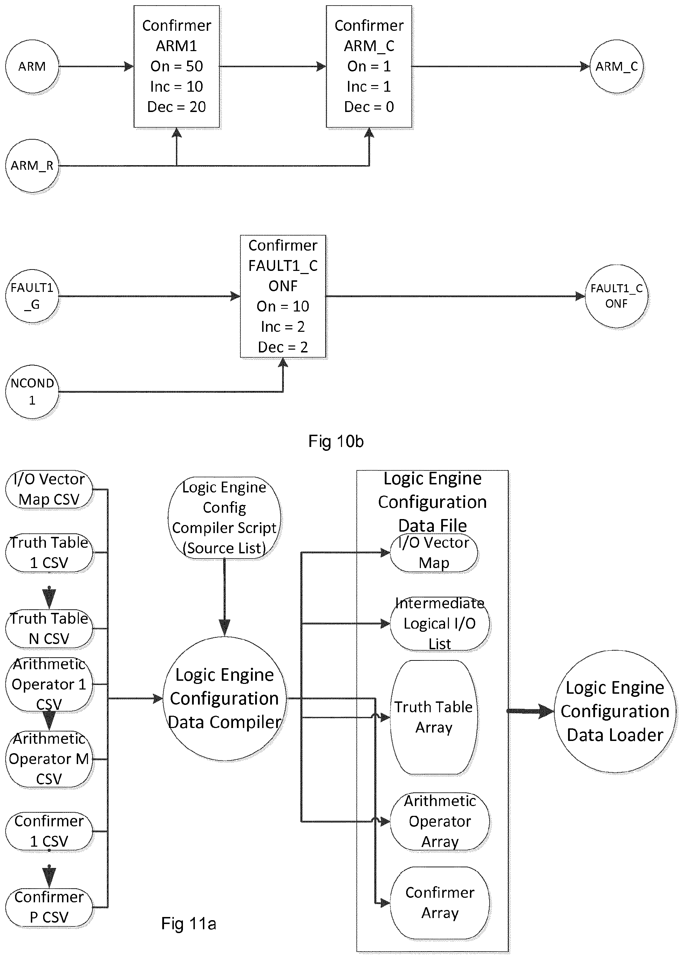

Figure 4a also shows that the system comprises a set of CSV files relating to confirmation functions, e.g. CNF1. A confirmation block is also illustrated in Figure 8g. Figures 10a and 10b give more detail of a suitable confirmer block which may be implemented in the system. Figure 10a shows the architecture for the confirmer block which is a configurable counter with comparators. The confirmer-counter provides programmable increment, decrement, saturation limits and thresholds for setting and clearing the output. When its input is TRUE the counter counts up; when the input is FALSE the counter counts down. The counter also has upper and lower saturation values which bound the counter value. The output of the confirmer:

- is TRUE when the counter value rises to exceed the "on" threshold;
- is FALSE when the counter value falls below the "off" threshold;
- keeps its current value when the counter value lies in between the "on" and "off" thresholds.

The pair of "on" and "off" thresholds therefore supports hysteresis in the output. The counter increment and decrement are not necessarily unity and are also configurable as is the upper saturation limit (the lower limit is fixed at zero). This structure is flexible enough to support behaviours like "confirm fault by three consecutive failures but clear on first good value", "latch fault after 10 failures" etc.

The configuration data for the confirmer may be specified using the following data structure:

| field | Meaning |
|-------|---------|
| output | I/O Vector Map entry used to store output confirmation bit |
| input | I/O Vector Map entry used to fetch input logical value |
| counter | I/O Vector Map entry used to store counter output |
| reset | I/O Vector Map entry used to fetch input that forces counter & output to zero |
| inc | Counter increment when input is TRUE |
| limit | Upper saturation limit for counter value |
| on | Output is set to TRUE when counter value reaches or exceeds this |
| dec | Counter decrement when input is FALSE |
| off | Output is set to FALSE when counter descends down to or below this |

I/O Vector Map entries are used to specify the input and output for each confirmation block. A third I/O Vector Map entry is used to hold the counter value between one update cycle and the next, a fourth refers to a signal used to reset the counter and the confirmer output. If no reset signal is needed then a fixed FALSE value in the I/O Vector should be used, for example two I/O items: io_zero and io_one to contain 0 and 1 respectively. Constant values in the I/O Vector may require continuous refreshing to mitigate against corruption caused by SEU.

The inc and dec parameters are the increment and decrement respectively. Note the decrement value is subtracted from the counter. The limit is the upper bound for the counter value. The "on" and "off" thresholds are applied as described above.

Figure 10b shows there confirmer blocks, ARM1, ARM_C and FAULT_CONF. The three confirmers are identified by their outputs, which are unique to them. They may be specified in a single file (e.g. a CSV file) as shown below or in separate files.

| output | input | counter | reset | inc | dec | limit | on | off | comment |
|---|---|---|---|---|---|---|---|---|---|
| arm1 | arm | arm_count | arm_r | 10 | 20 | 50 | 50 | 0 | 100ms debounce |
| arm_c | arm1 | arm18_count | arm_r | 1 | 0 | 1 | 1 | 0 | SR latch |
| fault1_conf | fault1_g | fault1_count | ncond1 | 2 | 2 | 10 | 10 | 0 | count to 10 |

The arm1 confirmer counts five consecutive TRUE values in arm before setting its output to TRUE. The recovery time is only three consecutive FALSE inputs. The 100ms referred to in the comment field assumes a 20ms update rate for the core logic engine.

The arm_c confirmer acts as an SR latch: arm_c is set by any one instance of arm1 so long as the reset signal arm_r is FALSE. An alternative implementation of this function can be made using a three input truth-table.

The fault1_conf confirmer is similar in behaviour to the arm1 confirmer, but uses different inputs and outputs and has the same recovery time as the confirmation time.

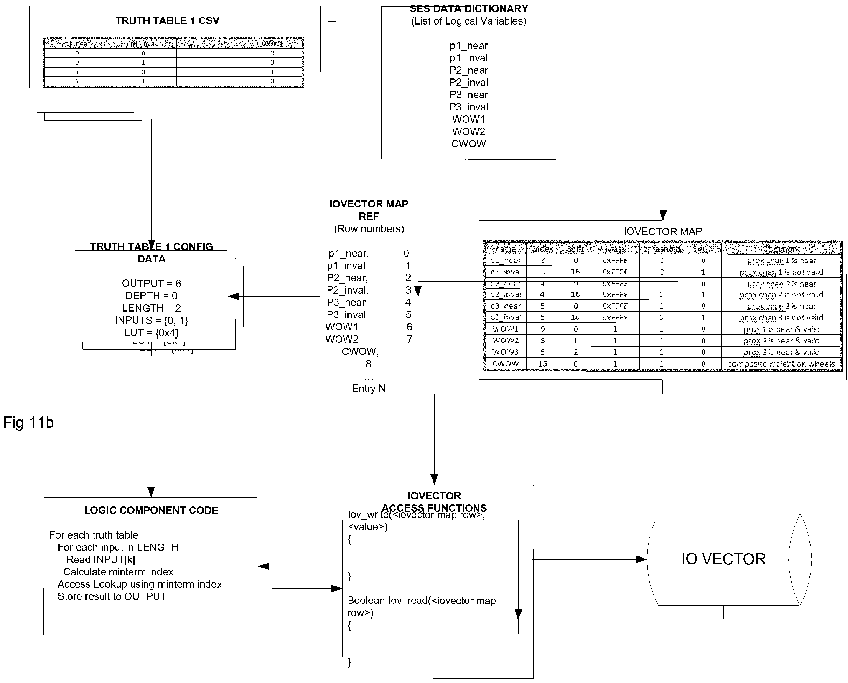

Figure 11 a summarises the method for configuring the core logic data. The source files for the configuration data is the following:

- • I/O Vector Map source file;
- • Set of CSV truth table files (truth table 1, ... truth table N);
- • Set of CSV arithmetic operator files (1...M);
- • Set of CSV confirmation logic files (1...P).

These are passed to the data compiler together with a single source file to indicate to the configuration data compiler what the list of source files is and where to find them The compiler then creates the configuration data file containing:

- • I/O Vector Map;
- • Array of truth table structures;
- • List of intermediate logical variables;
- • Array of arithmetic operation structures;
- • Array of confirmation logic structures.

This may then be loaded onto the target using a data loader, including for testing purposes as described in Figure 4a.

The I/O Vector Map source file is a design output from the software development in contrast to the other CSV files which have come from a common source, the SES. The list of CSV source files in the configuration compiler script is also derived from the SES. Figure 11b shows how the I/O vector is used to help build the configuration data that embodies the truth tables.

Thus in summary, the core logic engine implements three different functions:

- • Evaluation of arbitrary logic function
- • Evaluation of limited arithmetic operation
- • Implement programmable counter for confirmation operations

All three of these functions are programmable functions driven by tables of configuration data.

The logic function evaluation is limited to implementing combinatorial logic; sequential logic is implemented by writing outputs back into the I/O vector for further processing. Since any combinatorial logic function can be described as a truth table and the SES specifies the logical functions in truth tables this feature can be thought of as a truth-table evaluation engine. There are a number of possible implementations of a truth table and as an example, one possible implementation involves the following operations:

- Read each logical input in turn
- Calculate the minterm index by weighting the inputs
- Use the minterm index to fetch the output from a bit-packed lookup table
- Write the output to the specified location.

Provided the same convention for weighting the inputs is used when converting the truth-tables to bit packed look-up tables, the minterm indices themselves do not have to be stored when calculating the minterm index because the indices are implicit.

**Claims**

1. An aircraft control system comprising:

   a processor,
   a plurality of inputs coupled to the processor for providing input data to the processor,
   a configuration database coupled to the processor wherein said configuration database comprises a set of truth tables which completely and unambiguously define all the logical operations of the aircraft control system which are to be performed on said plurality of inputs, and
   at least one output for outputting data from the processor wherein the output data is determined by the processor performing the logical operations on the input data and wherein the output data is used to actuate a component of the aircraft control system,
   wherein each truth table has thirteen or fewer inputs whereby when designing the aircraft control system all the logical operations are exhaustively tested in a practical time frame.

2. An aircraft control system according to any preceding claim, wherein each of said plurality of inputs and said at least one output are collated in a single data structure.

3. An aircraft control system according to claim 2, wherein each logical operation is stored as an array of bits where the state of the inputs is used to define an address of the value of the output in the array and further comprising an input/output map in the form of a look-up table.

4. An aircraft control system according to claim 2 or claim 3, wherein at least one truth table in the set of truth tables defines a logical operation which is a cascaded logical operation in which the truth table requires an input in the form of an intermediate value which is an output from a second truth table defining a second logical operation and wherein the data structure comprises a public section for inputs from said aircraft control system and outputs to said aircraft control system and a private section for holding intermediate values.

5. An aircraft control system according to claim 4, wherein the public section of the input/output data structure is populated with first values for each input which are then held constant while the processor determines each intermediate value which is required to provide all the outputs whereby the inputs are made synchronous and wherein the private section is populated with a set of first intermediate values calculated using the first values for each input and wherein the values in the public section remain frozen while the first intermediate values are updated to determine further intermediate values and wherein when the outputs have been determined for a synchronous set of inputs and intermediates values, the public section is updated with the determined output values.

6. An aircraft control system according to any one of the preceding claims, wherein each truth table is assigned a precedence rank and/or wherein the processor is configured to process each truth table in order of the precedence ranks.

7. An aircraft control system according to claim 6, wherein the processor is configured to assign the precedence rank during a configuration phase by examining the inputs for each truth table and assigning a precedence rank of one to a truth table only if all inputs to that truth table are system inputs and a higher precedence rank to truth tables having inputs which are outputs from other truth tables..

**8.** An aircraft control system according to any one of the preceding claims, wherein each truth table has eight or fewer inputs.

**9.** An aircraft control system according to any one of the preceding claims, wherein the aircraft control system is selected from a steering controller, a landing gear controller, a door controller and a slide controller.

**10.** An aircraft control system according to claim 9 wherein the aircraft control system is a steering controller and the steering controller comprises one or more steering subsystems such as one or more of a steer by wire system, a rudder steering system and a tiller steering system.

**11.** An aircraft control system according to claim 10, wherein one truth table in the set of truth tables defines a logical operation which is a determination of whether or not the steering subsystem has failed and optionally the system comprises an alerting component and wherein when the output data is that the steering subsystem has failed, the alerting component of the aircraft control system is activated or wherein one truth table in the set of truth tables defines a logical operation which is a determination of whether or not tiller steering has failed and optionally wherein the plurality of inputs comprise one or more fault monitors which monitor the status of components of the tiller steering subsystem.

**12.** A test system for the aircraft control system according to any one of claims 1 to 11, the test system comprising:

means for exhaustively testing all the logical operations of the aircraft control system.

**13.** A method of testing an aircraft control system having a plurality of inputs and a plurality of outputs which actuate one or more components within the aircraft control system, the method comprising:

defining a plurality of logical operations which are to be performed on the plurality of inputs to generate the plurality of outputs;
expressing each logical operation as a truth table having thirteen or fewer inputs and having all outputs completely and unambiguously defined for the thirteen or fewer inputs; and
exhaustively testing each truth table.

**14.** The method according to claim 13, comprising:

defining at least one logical operation as a cascaded logical operation comprising first and second logical operations and
expressing the cascaded logical operation as a set of truth tables which comprises a first truth table for the first logical operation and a second truth table for the second logical operation, wherein the first truth table requires at least one input which is an output from the second truth table.

**15.** The method according to claim 13 or claim 14 comprising:

storing each truth table as an array of bits where the state of the inputs is used to define an address of the value of the output in the array and optionally
testing each truth table by providing a set of test inputs, retrieving the output by looking up of the value of the output in the array based on the test inputs and comparing the retrieve output with an expected output for the test input.

**Patentansprüche**

**1.** Luftfahrzeug-Steuersystem umfassend:

einen Prozessor,
eine Vielzahl von Eingängen, gekoppelt mit dem Prozessor zum Bereitstellen von Eingangsdaten an den Prozessor,
eine Konfigurationsdatenbank, gekoppelt mit dem Prozessor, wobei die Konfigurationsdatenbank einen Satz von Wahrheitstabellen umfasst, die komplett und unzweideutig alle logischen Vorgänge des Luftfahrzeug-Steuersystems definieren, die von der Vielzahl von Eingängen ausgeführt werden sollen, und

mindestens einen Ausgang zum Ausgeben von Daten vom Prozessor, wobei die Ausgangsdaten vom Prozessor bestimmt werden der die logischen Vorgänge über die Eingangsdaten ausführt, und wobei die Ausgangsdaten verwendet werden, um eine Komponente des Luftfahrzeug-Steuersystems zu betätigen, wobei jede Wahrheitstabelle dreizehn oder weniger Eingänge hat, wodurch beim Konstruieren des Luftfahrzeug-Steuersystems alle logischen Vorgänge in einem geeigneten Zeitrahmen vollständig getestet werden.

2. Luftfahrzeug-Steuersystem nach einem vorherigen Anspruch, wobei jeder der Vielzahl von Eingängen und der mindestens eine Ausgang in einer einzigen Datenstruktur vereint sind.

3. Luftfahrzeug-Steuersystem nach Anspruch 2, wobei jeder logische Vorgang als eine Bit-Matrix gespeichert wird, wo der Zustand der Eingänge verwendet wird, um eine Adresse des Werts des Ausgangs in der Matrix zu definieren, und ferner umfassend ein Ein-/Ausgangsabbild in der Form einer Suchtabelle.

4. Luftfahrzeug-Steuersystem nach Anspruch 2 oder Anspruch 3, wobei mindestens eine Wahrheitstabelle im Satz der Wahrheitstabellen einen logischen Vorgang definiert, der ein kaskadierter logischer Vorgang ist, in dem die Wahrheitstabelle einen Eingang in der Form von einem Zwischenwert erfordert, der ein Ausgang von einer zweiten Wahrheitstabelle ist, die einen zweiten logischen Vorgang definiert, und wobei die Datenstruktur einen öffentlichen Bereich für Eingänge von dem Luftfahrzeug-Steuersystem und Ausgänge zu dem Luftfahrzeug-Steuersystem und einen privaten Bereich zum Halten von Zwischenwerte umfasst.

5. Luftfahrzeug-Steuersystem nach Anspruch 4, wobei der öffentliche Bereich der Ein-/Ausgangsdatenstruktur mit ersten Werten für jeden Eingang besetzt ist, die dann konstant gehalten werden, während der Prozessor jeden Zwischenwert bestimmt, der erforderlich ist, um alle Ausgänge bereitzustellen, wodurch die Eingänge synchron gemacht werden, und wobei der private Bereich mit einem Satz von ersten Zwischenwerte besetzt ist, die unter Verwendung der ersten Werte für jeden Eingang berechnet werden, und wobei die Werte im öffentlichen Bereich gefroren bleiben, während die ersten Zwischenwerte aktualisiert werden, um weitere Zwischenwerte zu bestimmen, und wobei wenn die Ausgänge für einen synchronen Satz von Eingängen und Zwischenwerte bestimmt wurde, wird der öffentliche Bereich mit den bestimmten Ausgangswerten aktualisiert.

6. Luftfahrzeug-Steuersystem nach einem der vorherigen Ansprüche, wobei jeder Wahrheitstabelle ein Prioritätsrang zugeordnet ist und/oder wobei der Prozessor konfiguriert ist, um jede Wahrheitstabelle in der Reihenfolge der Prioritätsränge zu verarbeiten.

7. Luftfahrzeug-Steuersystem nach Anspruch 6, wobei der Prozessor konfiguriert ist, um den Prioritätsrang während einer Konfigurationsphase durch Untersuchen der Eingänge für jede Wahrheitstabelle zuzuordnen, und nur dann einen Prioritätsrang von eins zu einer Wahrheitstabelle zuzuordnen, wenn alle Eingänge zu dieser Wahrheitstabelle Systemeingänge sind, und einen höheren Prioritätsrang zu Wahrheitstabellen, die Eingänge haben, die Ausgänge von anderen Wahrheitstabellen sind.

8. Luftfahrzeug-Steuersystem nach einem der vorherigen Ansprüche, wobei jede Wahrheitstabelle acht oder weniger Eingänge hat.

9. Luftfahrzeug-Steuersystem nach einem der vorherigen Ansprüche, wobei das Luftfahrzeug-Steuersystem ausgewählt ist von einer Lenkungssteuereinheit, einer Fahrwerksteuereinheit, einer Türsteuereinheit und einer Schiebersteuereinheit.

10. Luftfahrzeug-Steuersystem nach Anspruch 9 wobei das Luftfahrzeug-Steuersystem eine Lenkungssteuereinheit ist und die Lenkungssteuereinheit eine oder mehrere Lenkungsuntersysteme umfasst, wie z. B. eines oder mehrere von einem drahtgebundenen Lenkungssystem, einem Seitenruderlenkungssystem und einem Ruderpinnenlenkungssystem.

11. Luftfahrzeug-Steuersystem nach Anspruch 10, wobei eine Wahrheitstabelle im Satz von Wahrheitstabellen einen logischen Vorgang definiert, der eine Bestimmung ist, ob das Lenkungsuntersystem ausgefallen ist, und optional umfasst das System eine Warnkomponente, und wobei wenn die Ausgangsdaten so sind, dass das Lenkungsuntersystem ausgefallen, die Warnkomponente des Luftfahrzeug-Steuersystems aktiviert wird, oder wobei eine Wahrheitstabelle im Satz von Wahrheitstabellen einen logischen Vorgang definiert, der eine Bestimmung ist, ob eine Ruderpinnenlenkung ausgefallen ist, und optional wobei die Vielzahl von Eingängen eine oder mehrere Fehlerüberwachungseinheiten umfasst, die den Status der Komponenten des Ruderpinnen-Lenkungsuntersystems überwachen.

**12.** Testsystem für das Luftfahrzeug-Steuersystem nach einem der Ansprüche 1 bis 11, das Testsystem umfassend:

Mittel zum vollständigen Testen aller logischen Vorgänge des Luftfahrzeug-Steuersystems.

**13.** Verfahren zum Testen eines Luftfahrzeug-Steuersystems mit einer Vielzahl von Eingängen und einer Vielzahl von Ausgängen, die eine oder mehrere Komponenten im Luftfahrzeug-Steuersystem betätigen, das Verfahren umfassend:

Definieren einer Vielzahl von logischen Vorgängen, die über die Vielzahl von Eingängen ausgeführt werden sollen, um die Vielzahl von Ausgängen zu erzeugen;
Ausdrücken jeden logischen Vorgangs als eine Wahrheitstabelle, die dreizehn oder weniger Eingänge hat, und wobei alle Ausgänge komplett und unzweideutig für die dreizehn oder weniger Eingänge definiert sind; und vollständiges Testen jeder Wahrheitstabelle.

**14.** Verfahren nach Anspruch 13, umfassend:

Definieren von mindestens einem logischen Vorgang als einen kaskadierten logischen Vorgang umfassend einen ersten und zweiten logischen Vorgang, und
Ausdrücken des kaskadierten logischen Vorgangs als einen Satz von Wahrheitstabellen, der eine erste Wahrheitstabelle für den ersten logischen Vorgang und eine zweite Wahrheitstabelle für den zweiten logischen Vorgang umfasst, wobei die erste Wahrheitstabelle mindestens einen Eingang erfordert, der ein Ausgang von der zweiten Wahrheitstabelle ist.

**15.** Verfahren nach Anspruch 13 oder Anspruch 14, umfassend:

Speichern jeder Wahrheitstabelle als eine Bit-Matrix, wo der Status der Eingänge verwendet wird, um eine Adresse des Werts des Ausgangs in der Matrix zu definieren und optional
Testen jeder Wahrheitstabelle durch Bereitstellen eines Satzes von Testeingängen, Abfragen des Ausgangs durch Suche nach dem Wert des Ausgangs in der Matrix beruhend auf den Testeingängen und Vergleichen des abgefragten Ausgangs mit einem erwarteten Ausgang für den Testeingang.


**Revendications**

**1.** Système de commande d'aéronef comprenant :

un processeur ;
une pluralité d'entrées couplée au processeur en vue de fournir des données d'entrée au processeur,
une base de données de configurations couplée au processeur, dans lequel ladite base de données de configurations comprend un ensemble de tables de vérité définissant complètement et sans ambiguïté toutes les opérations logiques du système de commande d'aéronef qui doivent être mises en oeuvre sur ladite pluralité d'entrées ; et
au moins une sortie pour délivrer en sortie des données à partir du processeur, dans lequel les données de sortie sont déterminées, par le processeur, en mettant en oeuvre les opérations logiques sur les données d'entrée, et dans lequel les données de sortie sont utilisées pour actionner un composant du système de commande d'aéronef ;
dans lequel chaque table de vérité présente treize entrées ou moins, moyennant quoi, lors de la conception du système de commande d'aéronef, toutes les opérations logiques sont testées de manière exhaustive selon un échéancier pratique.

**2.** Système de commande d'aéronef selon l'une quelconque des revendications précédentes, dans lequel chaque entrée de ladite pluralité d'entrées et chaque sortie de ladite au moins une sortie sont agrégées dans une unique structure de données.

**3.** Système de commande d'aéronef selon la revendication 2, dans lequel chaque opération logique est stockée sous la forme d'une matrice de bits où l'état des entrées est utilisé en vue de définir une adresse de la valeur de la sortie dans la matrice, et comprenant en outre une carte d'entrées/sorties sous la forme d'une table de consultation.

4. Système de commande d'aéronef selon la revendication 2 ou 3, dans lequel au moins une table de vérité dans l'ensemble de tables de vérité définit une opération logique qui correspond à une opération logique en cascade dans laquelle la table de vérité exige une entrée sous la forme d'une valeur intermédiaire qui correspond à une sortie provenant d'une seconde table de vérité définissant une seconde opération logique, et dans lequel la structure de données comprend une section publique pour des entrées en provenance dudit système de commande d'aéronef et pour des sorties à destination dudit système de commande d'aéronef, et une section privée destinée à conserver des valeurs intermédiaires.

5. Système de commande d'aéronef selon la revendication 4, dans lequel la section publique de la structure de données d'entrées/sorties est remplie par des premières valeurs pour chaque entrée, lesquelles sont ensuite maintenues constantes tandis que le processeur détermine chaque valeur intermédiaire requise en vue de fournir la totalité des sorties, moyennant quoi les entrées sont rendues synchrones, et, dans lequel la section privée est remplie par un ensemble de premières valeurs intermédiaires calculées en faisant appel aux premières valeurs pour chaque entrée, et dans lequel les valeurs dans la section publique restent figées tandis que les premières valeurs intermédiaires sont mises à jour en vue de déterminer des valeurs intermédiaires supplémentaires, et dans lequel, lorsque les sorties ont été déterminées pour un ensemble synchrone d'entrées et de valeurs intermédiaires, la section publique est mise à jour avec les valeurs de sortie déterminées.

6. Système de commande d'aéronef selon l'une quelconque des revendications précédentes, dans lequel chaque table de vérité se voit affecter un rang de priorité, et/ou dans lequel le processeur est configuré de manière à traiter chaque table de vérité dans l'ordre des rangs de priorité.

7. Système de commande d'aéronef selon la revendication 6, dans lequel le processeur est configuré de manière à affecter le rang de priorité au cours d'une phase de configuration, en examinant les entrées pour chaque table de vérité, et en affectant un rang de priorité de « un » à une table de vérité uniquement si toutes les entrées dans cette table de vérité sont des entrées de système, et un rang de priorité supérieur à des tables de vérité présentant des entrées qui correspondent à des sorties provenant d'autres tables de vérité.

8. Système de commande d'aéronef selon l'une quelconque des revendications précédentes, dans lequel chaque table de vérité présente huit entrées ou moins.

9. Système de commande d'aéronef selon l'une quelconque des revendications précédentes, dans lequel le système de commande d'aéronef est sélectionné parmi un contrôleur de direction, un contrôleur de train d'atterrissage, un contrôleur de porte et un contrôleur de toboggan.

10. Système de commande d'aéronef selon la revendication 9, dans lequel le système de commande d'aéronef est un contrôleur de direction et le contrôleur de direction comporte un ou plusieurs sous-systèmes de direction, par exemple un ou plusieurs systèmes parmi un système de direction par câble, un système de direction par gouvernail et un système de direction par barre.

11. Système de commande d'aéronef selon la revendication 10, dans lequel une table de vérité dans l'ensemble de tables de vérité définit une opération logique ayant pour objectif de déterminer si le sous-système de direction est défaillant ou non, et dans lequel, facultativement, le système comporte un composant d'alerte, et dans lequel, lorsque les données de sortie indiquent que le sous-système de direction est défaillant, le composant d'alerte du système de commande d'aéronef est activé, ou dans lequel une table de vérité dans l'ensemble de tables de vérité définit une opération logique ayant pour objectif de déterminer si une direction par barre est défaillante ou non, et, facultativement, dans lequel la pluralité d'entrées comporte un ou plusieurs moniteurs de défaillances qui surveillent l'état de composants du sous-système de direction par barre.

12. Système de test pour le système de commande d'aéronef selon l'une quelconque des revendications 1 à 11, le système de test comprenant :

   un moyen pour tester de manière exhaustive toutes les opérations logiques du système de commande d'aéronef.

13. Procédé de test d'un système de commande d'aéronef présentant une pluralité d'entrées et une pluralité de sorties qui actionnent un ou plusieurs composants au sein du système de commande d'aéronef, le procédé comprenant les étapes ci-dessous consistant à :

définir une pluralité d'opérations logiques, lesquelles doivent être mises en oeuvre sur la pluralité d'entrées en vue de générer la pluralité de sorties ;
exprimer chaque opération logique sous la forme d'une table de vérité présentant treize entrées ou moins et dont toutes les sorties sont définies complètement et sans ambiguïté pour les treize entrées ou moins ; et
tester de manière exhaustive chaque table de vérité.

**14.** Procédé selon la revendication 13, comprenant les étapes ci-dessous consistant à :

définir au moins une opération logique sous la forme d'une opération logique en cascade comprenant des première et seconde opérations logiques ; et
exprimer l'opération logique en cascade sous la forme d'un ensemble de tables de vérité qui comprend une première table de vérité pour la première opération logique, et une seconde table de vérité pour la seconde opération logique, dans lequel la première table de vérité nécessite au moins une entrée qui correspond à une sortie provenant de la seconde table de vérité.

**15.** Procédé selon la revendication 13 ou 14 comportant les étapes ci-dessous consistant à :

stocker chaque table de vérité sous la forme d'une matrice de bits où l'état des entrées est utilisé pour définir une adresse de la valeur de la sortie dans la matrice, et, facultativement,
tester chaque table de vérité en fournissant un ensemble d'entrées de test, récupérer la sortie en consultant la valeur de la sortie dans la matrice sur la base des entrées de test, et comparer la sortie récupérée à une sortie attendue pour l'entrée de test.

GPIO →

Proximity →

ARINC →

CAN →

Controller

→ GPIO

→ ARINC

→ CAN

Fig 1

Stage

Testing

System/
equipment
requirements
document

Software
High level
requirements

Software
Low level
requirements

Software
Code

System acceptance
testing

HSIT

LLRT
module testing

Review

Fig 2

Fig 3a

Fault monitor 1 → Processor

Fault monitor 2 →

Fault monitor 3 →

Fault in steerby wire system →

Processor → ARINC

Fig 3b

Fault in steerby wire system →

Fault in tiller steering system →

Fault in rudder steering system →

Fault in monitor lane →

Fault in FixedGain Active →

Maintenance caution →

Processor → ARINC

Fig 3c

Fig 3d

Fig 4a

Fig 4b

Fig 5

Fig 6

Fig 7

Core Logic
10

Core
I/O
Vector
126

Raw
I/O
Vector
124

Cascaded
Core Logic
110

Intermediate
Core
I/O
Vector
136

Intermediate
Raw
I/O
Vector
134

GPIO
Proximity
ARINC
CAN

A B C D E F

Fig 8a

Fig 8b

Fig 8c

Fig 8d

Fig 8e

Fig 8f

Fig 8g

ALU
evaluator 50

Fig 9a

EP 2 874 065 B1

Fig 9b

Fig 9c

Fig 9d

Fig 9e

EP 2 874 065 B1

Fig 10a

55

Fig 10b

Fig 11a

**TRUTH TABLE 1 CSV**

| p1_near | p1_inval | | WOW1 |
|---|---|---|---|
| 0 | 0 | | 0 |
| 0 | 1 | | 0 |
| 1 | 0 | | 1 |
| 1 | 1 | | 0 |

**SES DATA DICTIONARY**
(List of Logical Variables)

p1_near
p1_inval
P2_near
P2_inval
P3_near
P3_inval
WOW1
WOW2
CWOW

**IOVECTOR MAP**
**REF**
(Row numbers)

p1_near,        0
p1_inval        1
P2_near,        2
P2_inval,       3
P3_near         4
P3_inval        5
WOW1            6
WOW2            7
    CWOW,
        8
...
Entry N

**TRUTH TABLE 1 CONFIG**
**DATA**

OUTPUT = 6
DEPTH = 0
LENGTH = 2
INPUTS = {0, 1}
LUT = {0x4}

**IOVECTOR MAP**

| name | index | Shift | Mask | threshold | init | Comment |
|---|---|---|---|---|---|---|
| p1_near | 3 | 0 | 0xFFFF | 1 | 0 | prox chan 1 is near |
| p1_inval | 3 | 16 | 0xFFFE | 2 | 1 | prox chan 1 is not valid |
| p2_near | 4 | 0 | 0xFFFF | 1 | 0 | prox chan 2 is near |
| p2_inval | 4 | 16 | 0xFFFE | 2 | 1 | prox chan 2 is not valid |
| p3_near | 5 | 0 | 0xFFFF | 1 | 0 | prox chan 3 is near |
| p3_inval | 5 | 16 | 0xFFFE | 2 | 1 | prox chan 3 is not valid |
| WOW1 | 9 | 0 | 1 | 1 | 0 | prox 1 is near & valid |
| WOW2 | 9 | 1 | 1 | 1 | 0 | prox 2 is near & valid |
| WOW3 | 9 | 2 | 1 | 1 | 0 | prox 3 is near & valid |
| CWOW | 15 | 0 | 1 | 1 | 0 | composite weight on wheels |

Fig 11b

**LOGIC COMPONENT CODE**

For each truth table
  For each input in LENGTH
    Read INPUT[k]
    Calculate minterm index
  Access Lookup using minterm index
  Store result to OUTPUT

**IOVECTOR**
**ACCESS FUNCTIONS**
lov_write(<iovector map row>,
<value>)
{


}

Boolean lov_read(<iovector map
row>)
{


}

**IO VECTOR**